# EUROPÄISCHE PATENTSCHRIFT

(11) **EP 3 214 119 B1**
(45) Veröffentlichungstag und Bekanntmachung des Hinweises auf die Patenterteilung: **01.05.2019**
(21) Anmeldenummer: 17158645.6
(22) Anmeldetag: 01.03.2017
(51) Int. Cl.: C08L 7/00, C08L 9/00, C08L 21/00, C08L 23/12, C08L 23/16, C08L 23/22, C08L 31/04, B29K 96/04, B29B 7/48, B29K 7/00, B29K 9/06, B29K 23/00, B29K 105/00, C08L 9/02, C08L 9/06, C08L 23/08

(54) **THERMOPLASTISCHE ELASTOMERZUSAMMENSETZUNG AUS EINEM ELASTOMER, EINEM NICHT-ELASTOMEREN POLYOLEFIN UND EINEM THERMOPLASTISCHEN ELASTOMER AUF POLYOLEFIN-BLOCKCOPOLYMER-BASIS**
THERMOPLASTIC ELASTOMER COMPOSITION MADE OF AN ELASTOMER, A NON-ELASTOMER POLYOLEFIN AND A THERMOPLASTIC ELASTOMER ON THE BASIS OF A POLYOLEFIN BLOCK COPOLYMER
COMPOSITION ÉLASTOMÈRE THERMOPLASTIQUE CONSTITUÉE D'UN ÉLASTOMÈRE, D'UN POLYOLÉFINE NON ÉLASTOMÈRE ET D'UN ÉLASTOMÈRE THERMOPLASTIQUE À BASE DE COPOLYMÈRE-POLYOLÉFINE SÉQUENCÉ

(30) Priorität: 03.03.2016 DE 102016103822
(43) Veröffentlichungstag der Anmeldung: 06.09.2017
(73) Patentinhaber: Kraiburg TPE GmbH & Co. KG, 84478 Waldkraiburg (DE)
(72) Erfinder: Vielsack, Frieder, 84478 Waldkraiburg (DE)
(74) Vertreter: Eder Schieschke & Partner mbB

(56) Entgegenhaltungen:
- EP-A1- 1 197 521
- CN-A- 105 017 629
- US-A1- 2005 277 735
- US-A1- 2009 068 390
- US-A1- 2011 306 715
- US-A1- 2012 244 340
- US-A1- 2014 163 154
- US-B1- 6 258 862

## Beschreibung

Die vorliegende Erfindung betrifft eine thermoplastische Elastomerzusammensetzung aus einem Elastomer, einem nicht-elastomeren Polyolefin und einem thermoplastischen Elastomer auf Polyolefin-Blockcopolymer-Basis, wobei das Elastomer als unvernetztes Elastomer oder als dynamisch vernetztes Elastomer vorliegt. Weiterhin betrifft die vorliegende Erfindung auch die Verwendung einer Mischung aus einem Elastomer und einem Vernetzungsmittel für das Elastomer zur Herstellung einer erfindungsgemäßen thermoplastischen Elastomerzusammensetzung. Ein weiterer Gegenstand der vorliegenden Erfindung ist die Verwendung einer Mischung aus einem nicht-elastomeren Polyolefin und einem thermoplastischen Elastomer auf Polyolefin-Blockcopolymer-Basis zur Herstellung einer erfindungsgemäßen thermoplastischen Elastomerzusammensetzung. Zudem betrifft die vorliegende Erfindung die Verwendung einer erfindungsgemäßen thermoplastischen Elastomerzusammensetzung zur Herstellung eines Verbundmaterials mit einem Polyolefin. Die vorliegende Erfindung betrifft auch ein Verfahren zur Herstellung einer erfindungsgemäßen thermoplastischen Elastomerzusammensetzung sowie ein Verbundmaterial (Artikel) aus der erfindungsgemäßen thermoplastischen Elastomerzusammensetzung mit einem Polyolefin.

Im Stand der Technik sind nur thermoplastische Elastomerzusammensetzungen, wie beispielsweise THERMOLAST® K, THERMOLAST® V, THERMOLAST® A und HIPEX® der Fa. Kraiburg TPE GmbH & Co. KG, bekannt, die entweder eine gute Haftung zu Thermoplasten, wie Polyolefinen, oder eine gute chemische Beständigkeit aufweisen. Es sind keine thermoplastischen Elastomerzusammensetzungen bekannt, die sowohl eine gute Haftung zu Polyolefinen, wie bspw. Polypropylen, als auch eine gute chemische Beständigkeit aufweisen. Letzteres trifft insbesondere im meist geforderten Shore-A-Härtebereich von 30 bis 90 zu. Unter "chemischer Beständigkeit" soll erfindungsgemäß vorzugsweise eine Beständigkeit gegenüber Betriebsstoffen von Kraftfahrzeugen, wie Motorenölen, Getriebeölen, Kraftstoffen, wie Benzin und Diesel, sowie anderen Betriebsstoffen wie Ad-Blue® oder Kühlmitteln, verstanden werden.

Somit besteht insbesondere im Bereich Automotive sowie deren kunststoffverarbeitender Zuliefer-Industrie der Bedarf an thermoplastischen Elastomerzusammensetzungen, die eine gute Haftung zu Polyolefinen, vorzugsweise Polypropylen, als auch eine gute chemische Beständigkeit aufweisen.

Die US 2011/306715 A1 betrifft eine ölverstreckte Olefinblockcopolymerzusammensetzung, die ein Olefinblockcopolymer mit harten Segmenten und weichen Segmenten, wobei die weichen Segmente 9 Mol-% bis weniger als 15 Mol-% Comonomergehalt umfassen, ein Öl, ein oder mehrere Polyolefine und einen Füllstoff umfasst, wobei die Zusammensetzung nach dem Aussetzen bei 70°C für eine Woche eine Haftkraft von weniger als 0,1N und eine Shore-A-Härte von etwa 50 bis etwa 90 hat.

Die EP 1 197 521 A1 betrifft eine thermoplastische Elastomerzusammensetzung, umfassend ein Ethylen-α-Olefin-Copolymer und ein kristallines Polyethylenharz, wobei das kristalline Polyethylenharz in einer dreidimensionalen Netzwerkstruktur in einer das Ethylen-α-Olefin-Copolymer umfassenden Matrix vorliegt.

Die US 2009/068390 A1 betrifft eine Folie, umfassend eine Zusammensetzung aus einem vulkanisierten thermoplastischen Elastomer und einer Polyolefinzusammensetzung auf Polypropylenbasis, die bspw. dort Verwendung findet, wo sich weich anfühlende Materialien erwünscht sind.

Die US 2005/277735 A1 betrifft eine thermoplastische Vulkanisatzusammensetzung, umfassend: a) etwa 2-10 Gew.-%, bezogen auf das Polymergewicht von a) + b) + c), eines thermoplastischen Polyethylen- oder Polypropylenhomopolymers oder Ethylen-Propylen-Copolymers oder Copolymers, das Ethylen oder Propylen zusammen mit einem oder mehreren C₄- bis C₂₀-α-Olefinen umfasst, wobei der Thermoplast durch DSC eine Kristallinität von mindestens 25% aufweist; b) etwa 15 bis etwa 36 Gew.-% Gew.-%, bezogen auf das Polymergewicht von a) + b) + c), eines thermoplastischen statistischen Ethylen-α-Olefin-Polymers oder Blockcopolymers mit weniger als 5% Kristallinität; c) etwa 60 bis etwa 80 Gew.-% bezogen auf das Polymergewicht von a) + b) + c), eines vernetzten Elastomers, und d) etwa 50 bis etwa 65 Gew.-%, bezogen auf das Gesamtgewicht der Zusammensetzung a) + b) + c) + d), eines Verfahrensöls, wobei die thermoplastische Vulkanisatzusammensetzung eine Shore-A-Härte von weniger als 35 aufweist.

Die US 6,258,862 B1 betrifft ein Verfahren zur Herstellung eines Artikels, sowie den Artikel selbst, in Form eines Schaums aus einer Zusammensetzung, umfassend (A) 40 bis 80 Gew.-% mindestens einer unvernetzten Zusammensetzung, umfassend mindestens ein Polyolefin; und (B) 60 bis 20 Gew.-% mindestens einer vernetzten Zusammensetzung, umfassend mindestens ein Propylenpolymer und mindestens ein Ethylen-Vinylacetat-Copolymer (EVA); wobei das Verfahren das Schmelzen der Zusammensetzung, die (A) und (B) umfasst, unter Druck umfasst; Injizieren von mindestens einem unter Druck stehenden Gas in die Zusammensetzung umfassend (A) und (B); Extrudieren der gasinjizierten Zusammensetzung, umfassend (A) und (B), enthaltend das Gas und Ermöglichen der Expansion der extrudierten Mischungen.

Die CN 105 017 629 A betrifft ein Teearoma-Schuhpolstermaterial im wesentlichen aus 5 bis 15 Gewichtsteilen POE-Elastomer, 55 bis 75 Gewichtsteilen EVA-Kunststoffgranulat, 10 bis 25 Gewichtsteilen Polyethylen niedriger Dichte und 5 bis 20 Gewichtsteilen thermoplastischem Gummi.

Die US 2012/244340 A1 betrifft eine mehrschichtige Membran die eine erste Schicht, die aufgrund eines farblosen Füllmaterials im Wesentlichen weiß ist, und eine zweite Schicht, die einen wärmehärtenden Kautschuk umfasst, enthält.

Es war die Aufgabe der vorliegenden Erfindung ein thermoplastische Elastomerzusammensetzungen bereitzustellen, die sowohl eine gute Haftung zu Thermoplasten, wie Polyolefinen, z.B. Polypropylen, als auch eine gute chemische Beständigkeit aufweisen. Zudem sollen die Härten der thermoplastischen Elastomerzusammensetzungen im Bereich von 30 bis 90 Shore A (ShA) liegen.

Die erfindungsgemäße Aufgabe wird durch die Bereitstellung einer thermoplastischen Elastomerzusammensetzung gelöst, die ein Elastomer, ein nicht-elastomeres Polyolefin und ein thermoplastisches Elastomer auf Polyolefin-Blockcopolymer-Basis (TPO) enthält, wobei das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, epoxidierter Naturkautschuk und einer Mischung aus zwei oder mehreren der genannten Elastomere besteht, wobei das Elastomer als unvernetztes Elastomer oder als dynamisch vernetztes Elastomer vorliegt vorliegt.

Gemäß der vorliegenden Anmeldung wird unter einem thermoplastisches Elastomer ein TPE verstanden, das aus einem Polymer oder einer Polymermischung (Blend) besteht und bei seiner Gebrauchstemperatur Eigenschaften aufweist, die denen von vulkanisiertem Kautschuk ähnlich sind, das jedoch bei erhöhten Temperaturen wie ein thermoplastischer Kunststoff verarbeitet und aufbereitet werden kann. Gleiches gilt auch für die erfindungsgemäßen thermoplastischen Elastomerzusammensetzungen.

Insbesondere betrifft die vorliegende Erfindung auch eine Ausführungsform, in der in der erfindungsgemäßen thermoplastischen Elastomerzusammensetzung das Elastomer vorzugsweise ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk und einer Mischung aus zwei oder mehreren der genannten Elastomere besteht, wobei die genannten Elastomere als unvernetzte Elastomere oder als dynamisch vernetzte Elastomere vorliegen. Besonders bevorzugt ist es, dass das Elastomer ein Elastomer umfasst, das aus der Gruppe von Elastomeren ausgewählt ist, die aus Ethylen-Vinylacetat-Copolymer, Nitrilbutadien-Kautschuk und einer Mischung aus beiden Elastomeren besteht, wobei die Elastomere als unvernetzte Elastomere oder als dynamisch vernetzte Elastomere vorliegen.

Weiterhin bevorzugt ist es, dass das Elastomer in der erfindungsgemäßen Zusammensetzung aus einem oder mehreren der genannten Elastomere besteht.

In der erfindungsgemäßen Zusammensetzung liegt das Elastomer als dynamisch vernetztes Elastomer oder unvernetztes Elastomer vor. Die erfindungsgemäße Zusammensetzung kann ein Vernetzungsmittel oder kein Vernetzungsmittel aufweisen. Es gibt prinzipiell verschiedene Zustände, in denen die erfindungsgemäße thermoplastische Elastomerzusammensetzung vorliegen kann:
a) das Elastomer liegt als dynamisch vernetztes Elastomer vor und die erfindungsgemäße thermoplastische Elastomerzusammensetzung enthält kein weiteres Vernetzungsmittel;
b) das Elastomer liegt als dynamisch (teil-)vernetztes Elastomer vor und die erfindungsgemäße thermoplastische Elastomerzusammensetzung enthält weiterhin ein Vernetzungsmittel;
c) das Elastomer liegt unvernetzt vor, und die erfindungsgemäße Zusammensetzung enthält ein Vernetzungsmittel;
d) das Elastomer liegt unvernetzt vor, und die Zusammensetzung enthält vorzugsweise auch kein Vernetzungsmittel.

In einer Ausführungsform der vorliegenden Erfindung ist es demnach bevorzugt, dass die erfindungsgemäße thermoplastische Elastomerzusammensetzung zusätzlich ein Vernetzungsmittel aufweist.

In einer alternativen Ausführungsform ist es bevorzugt, dass in der erfindungsgemäßen thermoplastischen Elastomerzusammensetzung das Elastomer als dynamisch vernetztes Elastomer vorliegt.

In einer weiteren Ausführungsform der vorliegenden Erfindung weist die erfindungsgemäße thermoplastische Elastomerzusammensetzung vorzugsweise das TPO als Blockcopolymer auf, das mindestens zwei verschiedene Alkylen-Einheiten umfasst bzw. daraus besteht. Unter Alkylen-Einheiten versteht man die Wiederholungseinheiten des Polymers, aus denen das Polymer durch Polymerisation gebildet wird. Besonders bevorzugt ist es hierbei, dass das Blockcopolymer Ethylen- und PropylenEinheiten aufweist bzw. aus diesen Einheiten besteht.

In einer bevorzugten Ausführungsform der vorliegenden Erfindung ist das nicht-elastomere Polyolefin in der erfindungsgemäßen thermoplastischen Zusammensetzung ein Polypropylen.

Als Vernetzungsmittel in der erfindungsgemäßen thermoplastischen Elastomerzusammensetzung können die weiter unten angeführten Vernetzungsmittel - je nach verwendetem Elastomer - verwendet werden.

In der erfindungsgemäßen thermoplastischen Elastomerzusammensetzung liegt das Gewichtsverhältnis von Elastomer zu dem nicht-elastomeren Polyolefin vorzugsweise im Bereich von 100:15 bis 100:60, stärker bevorzugt im Bereich von 100:15 bis 100:50.

Weiterhin ist es bevorzugt, dass in der erfindungsgemäßen thermoplastischen Elastomerzusammensetzung das Gewichtsverhältnis von Elastomer zu TPO im Bereich von 100:5 bis 100:45 liegt, stärker bevorzugt im Bereich von 100:5 bis 100:30.

Die thermoplastische Elastomerzusammensetzung kann zudem zusätzlich einen Weichmacher enthalten. Entsprechende Weichmacher, die erfindungsgemäß eingesetzt werden können, sind ebenso weiter unten beschrieben. Hierbei wird der Weichmacher vorzugsweise in einem Gewichtsverhältnis Elastomer zu Weichmacher im Bereich von 100:40 bis 100:15, stärker bevorzugt in einem Bereich von 100:30 bis 100:20 eingesetzt.

Weiterhin kann die erfindungsgemäße thermoplastische Elastomerzusammensetzung auch weitere Additive, wie einen Stabilisator, einen Hilfsstoff, einen Farbstoff, einen Füllstoff und/oder einen Verträglichkeitsvermittler enthalten. Diese sind ebenso weiter unten genauer beschrieben.

Ein Stabilisator, Hilfsstoff und/oder Farbstoff wird vorzugsweise jeweils in einem Gewichtsverhältnis Elastomer zu den genannten eingesetzten Stoffen in einem Bereich von 100:4 bis 100:0,01 und stärker bevorzugt in einem Bereich von 100:0,05 bis 100:3 eingesetzt. Ein Füllstoff wird vorzugsweise in einem Gewichtsverhältnis Elastomer zu Füllstoff in einem Bereich von 100:100 bis 100:1 eingesetzt.

Zusätzlich zu dem Vernetzungsmittel kann die erfindungsgemäße thermoplastische Elastomerzusammensetzung auch einen Covernetzer enthalten. Erfindungsgemäß einsetzbare Covernetzer sind ebenfalls weiter unten beschrieben.

Die vorliegende Erfindung betrifft auch die Verwendung einer Mischung aus einem Elastomer und einem Venetzungsmittel für das Elastomer zur Herstellung einer erfindungsgemäßen thermoplastischen Elastomerzusammensetzung, worin das Elastomer aus der gleichen Gruppe von Elastomeren ausgewählt wird, die weiter oben in Verbindung mit der erfindungsgemäßen thermoplastischen Elastomerzusammensetzung genannt sind. Die dabei bevorzugt erwähnten Elastomere sind auch in der erfindungsgemäßen Verwendung bevorzugt. Das Gewichtsverhältnis von Elastomer zu Vernetzungsmittel liegt vorzugsweise ebenso in dem für die erfindungsgemäße thermoplastische Elastomerzusammensetzung angegebenen Bereich.

Die erfindungsgemäße Verwendung der Mischung aus einem Elastomer und einem Vernetzungsmittel für das Elastomer kann zusätzlich einen Covernetzer, einen Weichmacher oder ein weiteres Additiv enthalten. Die auch weiter oben in Verbindung mit der erfindungsgemäßen thermoplastischen Elastomerzusammensetzung genannten Covernetzer, Weichmacher oder weiteren Additive werden auch hier vorzugsweise eingesetzt. Die in Verbindung mit der erfindungsgemäßen thermoplastischen Elastomerzusammensetzung angegebenen Gewichtsverhältnisse sind auch hier bevorzugt.

Die vorliegende Erfindung betrifft weiterhin die Verwendung einer Mischung aus einem nicht-elastomeren Polyolefin und einem thermoplastischen Elastomer auf Polyolefin-Blockcopolymer-Basis (TPO) zur Herstellung einer erfindungsgemäßen Elastomerzusammensetzung. Erfindungsgemäß verwendbare thermoplastische Elastomere auf Polyolefin-Blockcopolymer-Basis sowie nicht-elastomere Polyolefine sind weiter unten beschrieben.

Die vorliegende Erfindung betrifft auch die Verwendung einer erfindungsgemäßen thermoplastischen Elastomerzusammensetzung zur Herstellung eines Verbundmaterials mit einem Polyolefin, vorzugsweise einem Polypropylen, beziehungsweise zur Haftung der erfindungsgemäßen thermoplastischen Elastomerzusammensetzung auf einem Polyolefin. Dabei können das nicht-elastomere Polyolefin in der erfindungsgemäßen thermoplastischen Elastomerzusammensetzung und das Polyolefin, mit dem ein Verbundmaterial hergestellt wird, gleich oder unterschiedlich sein. In anderen Worten betrifft die vorliegende Erfindung auch ein Verfahren zur Herstellung eines Artikels, z.B. in Form eines Verbundmaterials, aus der erfindungsgemäßen thermoplastischen Elastomerzusammensetzung und einem Polyolefin, wobei die thermoplastische Elastomerzusammensetzung mit einem Polyolefin verbunden wird. Dabei wird bei der erfindungsgemäßen Verwendung bzw. dem erfindungsgemäßen Verfahren als Verarbeitungsmethode zur Herstellung der Verbundmaterialien Spritzguss, Mehrkomponenten-Spritzguss, Spritzguss-Einlegeverfahren, Extrusion oder Formpressverfahren verwendet, wobei Spritzguss, Spritzguss-Einlegeverfahren, Mehrkomponenten-Spritzguss und Extrusion bevorzugt und Mehrkomponenten-Spritzguss ganz besonders bevorzugt ist.

Somit betrifft die vorliegende Erfindung auch einen Artikel, z.B. in Form eines Verbundmaterials, aus einer erfindungsgemäßen thermoplastischen Elastomerzusammensetzung und einem Polyolefin.

Die vorliegende Erfindung betrifft auch die Verwendung einer erfindungsgemäßen thermoplastischen Elastomerzusammensetzung zur Herstellung von Bauteilen oder Formkörpern im Automobilinnenbereich sowie unter der Motorhaube ("under the hood"), d.h. im Motorraum von Fahrzeugen, zur Herstellung von Industriegeräten, Industriewerkzeugen, Badarmaturen, Haushaltsgeräten, medizinischen Verbrauchsartikeln und Geräten, Behältern für Hygieneartikel und Kosmetika und allgemein Dichtungsmaterialien.

Weiterhin betrifft die vorliegende Erfindung auch ein Verfahren zur Herstellung einer erfindungsgemäßen thermoplastischen Elastomerzusammensetzung, worin ein Elastomer mit einem nicht-elastomeren Polyolefin und einem thermoplastischen Elastomer auf Polyolefin-Blockcopolymer-Basis (TPO) vermischt wird, wobei das Elastomer aus der Gruppe von Elastomeren ausgewählt ist, die weiter oben in Verbindung mit der erfindungsgemäßen thermoplastischen Elastomerzusammensetzung angegeben sind. Die dabei angegebenen bevorzugten Elastomere sind auch hier bevorzugt. Die angegebenen Gewichtsverhältnisse in der erfindungsgemäßen thermoplastischen Elastomerzusammensetzung sind auch die Verhältnisse, in denen die Komponenten in dem erfindungsgemäßen Verfahren eingesetzt werden. Bevorzugte Verfahrensdetails sind ebenso weiter unten beschrieben.

Die zuvor genannten und in den erfindungsgemäßen thermoplastischen Elastomerzusammensetzungen bzw. bei den erfindungsgemäßen Verwendungen und Verfahren eingesetzten Komponenten werden im weiteren genauer beschrieben:
- A:: Elastomer
- B:: nicht-elastomeres Polyolefin
- C:: Thermoplastisches Elastomer auf Polyolefin-Blockcopolymer-Basis
- D:: Vernetzungsmittel
- E:: Covernetzer
- F:: Weichmacher
- G:: Stabilisator, Hilfsstoff, Farbstoff
- H:: Füllstoff

### Komponente A: Elastomer

Unter dem Begriff "Elastomer" wird nicht nur ein einzelnes Elastomer verstanden, sondern auch eine Mischung aus zwei oder mehreren Elastomeren. In allen erfindungsgemäßen Ausführungsformen enthält das Elastomer ein Elastomer (bzw. besteht daraus), das aus der Gruppe von Elastomeren ausgewählt die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, expoxidiertem Naturkautschuk oder einer Mischung der genannten Elastomere besteht. Als Elastomer kann ein einzelnes der genannten Elastomere, aber auch eine Kombination von zwei oder mehr der genannten Elastomere eingesetzt werden. Die Elastomere können in der erfindungsgemäßen thermoplastischen Elastomerzusammensetzung in ihrer unvernetzten Form vorliegen, sie können jedoch auch dynamisch vernetzt vorliegen. Beschreibungen der einzelnen Elastomerklassen sowie im Handel erhältliche Produkte finden sich beispielsweise in Kapitel 7.1. von "K. Oberbach, Kunststoff Taschenbuch, Carl Hanser Verlag München Wien, 26. Ausgabe (1995)".

Ethylen-Vinylacetat-Copolymere (EVM) sind Copolymerisate aus Ethylen und Vinylacetat. EVM sind zum Beispiel unter den Handelsnamen Levapren® oder Levamelt® der Lanxess Deutschland GmbH kommerziell erhältlich. Erfindungsgemäß bevorzugt eingesetzte Ethylen-Vinylacetat-Copolymere sind Levamelt® 400 (40 ± 1,5 Gew.-% Vinylacetat), Levamelt® 450 (45 ± 1,5 Gew.-% Vinylacetat), Levamelt® 452 (45 ± 1,5 Gew.-% Vinylacetat), Levamelt® 456 (45 ± 1,5 Gew.-% Vinylacetat), Levamelt® 500 (50 ± 1,5 Gew.-% Vinylacetat), Levamelt® 600 (60 ± 1,5 Gew.-% Vinylacetat), Levamelt® 700 (70 ± 1,5 Gew.-% Vinylacetat), Levamelt® 800 (80 ± 2 Gew.-% Vinylacetat) und Levamelt® 900 (90 ± 2 Gew.-% Vinylacetat), beziehungsweise die entsprechenden Levapren®-Typen, wobei Levamelt® 600 besonders bevorzugt ist. In den erfindungsgemäßen Zusammensetzungen kann als Komponente ein Ethylen-Vinylacetat-Copolymer eingesetzt werden, es ist jedoch ebenfalls möglich, Mischungen aus zwei oder mehr Ethylen-Vinylacetat-Copolymeren einzusetzen. Die Vernetzung bei EVM erfolgt peroxidisch.

Nitrilbutadien-Kautschuk (NBR) sind Copolymerisate aus Acrylnitril (ACN) und 1,3-Butadien mit variierenden Zusammensetzungen. NBR lassen sich aufgrund ihrer enthaltenen Doppelbindungen sowohl peroxidisch als auch über Phenolharze oder Schwefel vernetzen. In den erfindungsgemäßen thermoplastischen Elastomerzusammensetzungen kommen vorzugsweise die peroxidische Vernetzung und die Vernetzung über Phenolharze zum Einsatz. Beispiele für erfindungsgemäß einzusetzende NBR sind unter den Handelsnamen Perbunan®, Krynac®, Buna® N, oder Europrene® N bekannt und kommerziell erhältlich.

Hydrierter Nitrilbutadien-Kautschuk (H-NBR) wird durch Hydrierung der in NBR enthaltenen Doppelbindungen erhalten. H-NBR lässt sich peroxidisch vernetzen. Beispiele für erfindungsgemäß einzusetzende H-NBR sind unter den Handelsnamen Therban® (Lanxess) und Therban® AT (Lanxess) bekannt und kommerziell erhältlich.

Butyl-Kautschuk (IIR) wird auch Isobuten-Isopren-Kautschuk genannt. Aus der Gruppe der Elastomere zählt IIR zu den Synthesekautschuken. IIR ist ein Copolymerisat aus Isobuten und Isopren, wobei vorzugsweise Isobuten in einer Menge von 95 bis 99 Mol-% und Isopren in einer Menge von 1 bis 5 Mol-%, bezogen auf das gesamte Molgewicht, vorliegt. Er wird erfindungsgemäß vorzugsweise phenolisch oder mithilfe von Peroxiden vernetzt.

Naturkautschuk (NR) ist ein Homopolymerisat des Isoprens, das fast ausschließlich 1,4-cis-Verknüpfung aufweist. Typischerweise liegt das mittlere Molgewicht Mw bei etwa 2*10⁶ g/mol. NR wird erfindungsgemäß vorzugsweise phenolisch oder mithilfe von Peroxiden vernetzt.

Isopren-Kautschuk (IR) ist die synthetisch produzierte Variante des Naturkautschuks. Sie unterscheidet sich von diesem in erster Linie durch die etwas geringere chemische Reinheit. Dies liegt daran, dass die zur Polymerisation eingesetzten Katalysatoren eine geringere Effektivität besitzen als die in der Natur vorkommenden Enzyme. Die Reinheit von Naturkautschuk liegt vorzugsweise bei mehr als 99,9%, wohingegen sie bei den synthetisch hergestellten IR - je nach eingesetztem Katalysator - nur etwa 92% bis 97% erreicht. Wie der Naturkautschuk ist auch IR peroxidisch, phenolisch oder mit Schwefel vernetzbar. Vorzugsweise erfolgt die Vernetzung phenolisch oder mithilfe von Peroxiden.

Acrylat-Kautschuke (ACM) sind Copolymere aus AcrylsäureAlkylestern und einem weiteren vinylischen Polymer, wie beispielsweise ein Copolymer aus Acrylsäureester und 2-Chlorethylvinylether oder ein Copolymer aus Acrylsäureester und Acrylnitril. Die Art der Vernetzung solcher Polymere ist abhängig von den verwendeten Comonomeren.

Ethylen-Acrylat-Kautschuk (AEM) ist ein Copolymerisat aus Ethylen und Methylacrylat. Kommerziell erhältlich ist dieser beispielsweise als Vamac® von der Firma DuPont.

Silikon-Kautschuke werden aus in den gummielastischen Zustand überführbaren Massen hergestellt, die Poly(organo)siloxane enthalten und die für Vernetzungsreaktionen zugängliche Gruppen aufweisen. In anderen Worten sind Silikonkautschuke Poly(organo)siloxane, die mit einem Vernetzungsmittel vernetzt sind. Die Vernetzung kann über (organische) Peroxide erfolgen, sie kann jedoch auch dadurch zustande kommen, dass Si-H-Gruppen katalytisch an siliziumgebundene Vinylgruppen addiert werden, wobei beide Gruppen in die Polymerketten bzw. an deren Ende eingebaut sind.

Styrol-Butadien-Kautschuk (SBR) ist ein Copolymerisat aus Styrol und 1,3-Butadien, wobei erfindungsgemäß der Styrolgehalt unter 25% (im Verhältnis zum Butadiengehalt) liegen sollte, da bei höherem Syrolgehalt der Kautschuk thermoplastische Eigenschaften annimmt. SBR ist sowohl peroxidisch als auch durch Phenolharze sowie durch Schwefel vernetzbar. In den erfindungsgemäßen Zusammensetzungen kommen hier vorzugsweise die peroxidische Vernetzung und die Vernetzung über Phenolharze zum Einsatz. Beispiele für erfindungsgemäß einzusetzende SBR sind unter den Handelsnamen Kralex® und Europrene® SBR bekannt und kommerziell erhältlich.

Chloropren-Kautschuk (CR) wird auch Polychloropren oder Chlorbutadien-Kautschuk genannt und ist ein Synthesekautschuk, der auch unter dem Markennamen Neopren® bekannt ist. Neopren® ist eine Marke des Unternehmens DuPont, der Handelsnamen der Fa. Lanxess ist z.B. Baypren®. Die Herstellung erfolgt durch Polymerisation von 2-Chlor-1,3-Butadien (Chloropren) .

Brombutyl-Kautschuk (bromierter IRR) ist Butyl-Kautschuk, der mit Brom halogeniert wird. Dazu wird der Kautschuk vorzugsweise in einem inerten Lösungsmittel gelöst und unter kräftigem Rühren wird flüssiges Brom zugegeben. Der resultierende Bromwasserstoff wird mit Natronlauge neutralisiert.

Epichlorhydrin-Kautschuk (ECO) wird durch ringöffnende Polymerisation von Epichlorhydrin gegebenenfalls in Gegenwart von weiteren Comonomeren hergestellt. Kommerziell ist Epichlorhydrin-Kautschuk beispielsweise unter dem Handelsnamen HydrinECO® der Firma Zeon erhältlich.

Unter epoxidiertem Naturkautschuk wird Naturkautschuk verstanden, wie er vorstehend definiert ist, der epoxidiert wurde.

### Komponente B: nicht-elastomeres Polyolefin

Nicht-elastomere Polyolefine sind beispielsweise Copolymere aus Polyethylen, wie HDPE (high density polyethylene), MDPE (medium density polyethylene), LDPE (low density polyethylene), LLDPE (linear low density polyethylene), VLDPE (very low density polyethylene); ein Homopolymer aus Propylen; ein statistisches Copolymer aus Propylen und Ethylen; und Kombinationen derselben.

Für die Erfindung geeignete Polyolefine sind vor allem diejenigen, die sich für die Verarbeitung im Spritzguss eignen. Geeignete Polyolefine sind solche mit guten Fließeigenschaften und Steifigkeit.

Homopolymere von Propylen (hPP) sind kommerziell erhältlich und es kann jedes dieser erhältlichen hPPs erfindungsgemäß eingesetzt werden.

Das hPP kann einen Schmelzindex-Wert gemäß ISO 1133 (bei 230°C mit 2,16 Kg) im Bereich von 0,5 g/10 min bis 200 g/10 min, und bevorzugt im Bereich von 4 g/10 min bis 50 g/10 min; eine Zugfestigkeit gemäß ISO 527-1, -2 im Bereich von 15 MPa bis 50 MPa, und vorzugsweise im Bereich von 20 MPa bis 40 MPa; eine Bruchdehnung gemäß ISO 527-1, -2 im Bereich von 1% bis 500%, und vorzugsweise im Bereich von 10% bis 300% aufweisen.

Kommerziell erhältliche hPP sind beispielsweise Produkte der Lyondell-Basell, die unter dem Handelsnamen Moplen® erhältlich sind, wie Moplen® HP500N, Moplen® HP501L.

Statistische Polypropylene-Copolymere (rPP) sind ebenso kommerziell erhältlich und jedes dieser rPPs kann erfindungsgemäß verwendet werden. Als Comonomer ist Ethylen und/oder Buten bevorzugt.

Das rPP kann einen Schmelzindex gemäß ISO 1133 (bei 230°C mit 2,16 kg) im Bereich von 0,5 g/10 min bis 200 g/10 min, und vorzugsweise im Bereich von 4 g/10 min bis 50 g/10 min; eine Zugfestigkeit gemäß ISO 527-1, -2 im Bereich von 15 MPa bis 50 MPa, und vorzugsweise im Bereich von 20 MPa bis 40 MPa; eine Bruchdehnung gemäß ISO 527-1, -2 im Bereich von 1% bis 500%, und vorzugsweise im Bereich von 10% bis 300% aufweisen.

Es können Polyethylene verschiedener Dichte erfindungsgemäß verwendet werden. Diese sind ausreichend kommerziell verfügbar.

Es kann jegliches Polyethylen verwendet werden, dessen Schmelzfluss im Bereich von 0,5 g/min bis 10 g/10 min liegt. HDPE kann einen Schmelzindex gemäß ISO 1133 (bei 190°C mit 2,16 kg) im Bereich von 0,02 g/10 min bis 55 g/10 min, und vorzugsweise im Bereich von 0,9 g/10 min bis 10 g/10 min; eine Zugfestigkeit gemäß ISO 527-1, -2 im Bereich von 12 MPa bis 32 MPa, und vorzugsweise im Bereich von 20 MPa bis 30 MPa; eine Bruchdehnung gemäß ISO 527-1, -2 im Bereich von 50% bis 1200%, und vorzugsweise im Bereich von 600% bis 700% aufweisen.

LDPE kann einen Schmelzindex gemäß ISO 1133 (bei 190°C mit 2,16 kg) im Bereich von 0,5 g/10 min bis 200 g/10 min, und vorzugsweise im Bereich von 0,7 g/10 min bis 7 g/10 min; eine Zugfestigkeit gemäß ISO 527-1, -2 im Bereich von 6 MPa bis 33 MPa, und vorzugsweise im Bereich von 12 MPa bis 24 MPa; eine Bruchdehnung gemäß ISO im Bereich von 100% bis 800%, und vorzugsweise im Bereich von 500% bis 750% haben.

Besonders bevorzugt ist es erfindungsgemäß jedoch, dass das nicht-elastomere Polyolefin eines ist, das Propylen in seinen Wiederholungseinheiten umfasst. Noch stärker bevorzugt ist das nicht elastomere Polyolefin ein hPP.

### Komponente C: Thermoplastisches Elastomer auf Polyolefin-Blockcopolymer-Basis (TPO)

Als erfindungsgemäße TPO auf Polyolefin-Blockcopolymer-Basis können die in Kapitel 5 von "G. Holden, H.R. Kricheldorf, R.P. Quirk (Eds)., Thermoplastic Elastomers, Carl Hanser Verlag, third edition, Munich (2004)" verwendet werden, wobei unter den darin beschriebenen TPOs ausschließlich die Blockcopolymere (Kapitel 5.1. und Kapitel 5.3) für die vorliegende Erfindung relevant sind. TPOs auf Basis von Blends wie beispielsweise EPDM und PP fallen nicht unter erfindungsgemäße TPOs. Die erfindungsgemäßen TPO auf Polyolefin-Blockcopolymer-Basis sind folglich Blockcoplymere, deren Blöcke aus Olefin-Monomeren als Wiederholungseinheiten aufgebaut sind. Dabei weisen die erfindungsgemäßen TPO auf Polyolefin-Blockcopolymer-Basis mindestens zwei unterschiedliche Polymerblöcke auf. Diese Blöcke können aus einer Olefinsorte oder aus zwei oder mehreren Olefinsorten aufgebaut sein. Die zum Aufbau des erfindungsgemäßen TPOs auf Polyolefin-Blockcopolymer-Basis verwendeten Olefine sind aliphatische Olefine, wie bspw. Ethylen, Propylen oder Butylen, wobei erfindungsgemäß Ethylen und Propylen bevorzugt sind. Besonders bevorzugt sind die erfindungsgemäßen TPO auf Polyolefin-Blockcopolymer-Basis ausschließlich aus aliphatischen Olefinen als sogenannte Wiederholungseinheiten aufgebaut. Erfindungsgemäß sind von der Definition der "TPO auf Polyolefin-Blockcopolymer-Basis" solche ausgenommen, die einen aromatischen Rest aufweisen (solche sind für den Fachmann als TPS (thermoplastische Elastomere auf Styrol-Basis) bekannt). Besonders bevorzugt für die hier beschriebene Anwendung beziehungsweise die erfindungsgemäße Zusammensetzung sind TPO, deren Blöcke aus Polypropylen, Polyethylen oder einem statistischen Ethylen/Propylen-Copolymer aufgebaut sind bzw. daraus bestehen. Kommerziell erhältlich sind solche TPO beispielsweise unter dem Handelsnamen Hifax CA 10 A der Fa. Lyondell-Basell. Weiterhin besonders bevorzugt sind die in US 8,481,637 B2 ausführlich beschriebenen Polyolefin-Blockcopolymere (dort als "olefin block copolymers, OBC" bezeichnet) auf die hier in vollem Umfang Bezug genommen wird. Hierbei handelt es sich um Polymere, die abwechselnde Blöcke eines harten (sehr starren) und eines weichen (hochelastomeren) Segments aufweisen. Solche Produkte werden von Dow Chemicals unter dem Handelsnamen INFUSE™ vertrieben. Insbesondere sind die Typen mit Verwendungsempfehlung für TPE bevorzugt (INFUSE™ 9010, 9007, 9107, 9807) .

Weitere Beispiele erfindungsgemäßer TPO auf Polyolefin-Blockcopolymer-Basis sind sogenannte hydrierte Dien-Blockcolymere. Solche Polymere weisen vorzugsweise Polymerblöcke auf, die aus hydriertem Polybutadien oder hydriertem Polyisopren bestehen.

### Komponente D: Vernetzungsmittel

Je nach verwendetem Elastomer ist einem Fachmann bekannt, welches Vernetzungsmittel er nehmen kann, um eine Vernetzung zu erzielen. Erfindungsgemäß sind die weiter oben genannten Elastomere entweder durch Zusatz von Peroxiden, Phenolharzen, Schwefel oder Metallionen vernetzbar.

Als radikalische Vernetzungsinitiatoren (Vernetzungsmittel) geeignete Peroxide sind dem Fachmann bekannt. Beispiele hierfür sind organische Peroxide, z.B. Alkyl- und Aryl-peroxide, Alkyl-persäureester, Aryl-persäureester, Diacylperoxide, polyvalente Peroxide wie 2,5-Dimethyl-2,5-di(tert-butylperoxy)hexin-3 (z.B. Trigonox® 145-E85 oder Trigonox® 145-45 B), Di-tert-butylperoxid (z.B. Trigonox® B), 2,5-Dimethyl-2,5-di(tert-butylperoxy)hexin (z.B. Trigonox® 101), tert-Butyl-cumyl-peroxid (z.B. Trigonox® T), Di-tert-butyl-peroxyisopropyl(benzol) (z.B. Perkadox® 14-40), Dicumyl-peroxid (z.B. Perkadox® BC40), Benzoylperoxid, 2,2- bis (tert-butylperoxy)diisopropylbenzol (z.B. Volcup® 40 AE), 3,2,5-Trimetyl-2,5-di(benzoylperoxy)hexan und (2,5-bis(tert-butylperoxy)-2,5-dimetylhexan, 3,3,5,7,7-Pentametyl-1,2,4-trioxepan (z.B. Trigonox® 311).

Bevorzugt werden solche Peroxide eingesetzt, deren Vernetzungstemperaturen oberhalb der Schmelz- beziehungsweise Erweichungstemperaturen der Komponente A liegen. Aufgrund der hohen Schmelz- beziehungsweise Erweichungstemperatur der Komponente B erfolgt erfindungsgemäß die Vernetzung der elastomeren Phase (des Elastomers) zur Herstellung der thermoplastischen Elastomerzusammensetzungen vorzugsweise in einer entsprechend heißen Schmelze. Dies erfordert - in einer bevorzugten Ausführungsform - den Einsatz von Peroxiden mit hohen Vernetzungstemperaturen. Peroxide mit niedrigeren (üblichen) Vernetzungstemperaturen zerfallen bereits bei erstem Kontakt mit der Polymerschmelze und werden nicht homogen eingemischt und vernetzen die elastomere Phase nicht ausreichend oder inhomogen. Besonders bevorzugt werden daher erfindungsgemäß Peroxide eingesetzt, die Vernetzungstemperaturen von ≥ 175°C, besonders bevorzugt ≥ 180°C, ganz besonders bevorzugt ≥ 185°C, insbesondere bevorzugt ≥ 190°C und weiter bevorzugt ≥ 200°C aufweisen.

Bei Verwendung eines Peroxids als Vernetzungsmittel ist es weiterhin erfindungsgemäß bevorzugt, dass die (noch vernetzbaren) thermoplastischen Elastomerzusammensetzungen ein Gewichtsverhältnis von Peroxid zu Elastomer in einem Bereich von 0,1 bis 5, bevorzugt 0,5 bis 5, und ganz besonders bevorzugt 0,6 bis 1,8 aufweisen.

Insbesondere bei der Verwendung von Dien-haltigen Kautschuken als Komponente A, wie z.B. NBR, eignen sich neben der peroxidischen Vernetzung auch Phenolharze zur Vernetzung der Komponente A. Zum Einsatz kommen hierbei vorzugsweise Phenolharze mit ausreichend hoher Reaktivität bei Mischtemperaturen von mindestens 220°C. Hier sind auch bromierte Phenolharze zu nennen.

Zur Beschleunigung der Phenolharzvernetzung kommen dem Fachmann bekannte anorganische Verbindungen zum Einsatz. Zur Beschleunigung und Katalyse der Reaktion können beispielsweise SnCl₂ und/oder ZnO und/oder ZnCl₂ eingesetzt werden. Es können aber auch halogenhaltige Elastomere eingesetzt werden. Besonders bevorzugt wird ZnO eingesetzt, da dieses zudem als Katalysator wirkt.

Auch ist es bei den nicht bromierten Phenolharzen sinnvoll Halogenspender in Form von Lewis-Säuren oder Chloropren-Kautschuk zuzugeben. Somit kann in den thermoplastischen Elastomerzusammensetzungen gemäß der vorliegenden Erfindung eine Kombination aus mindestens einem Phenolharz und mindestens einer Cl-haltigen Lewis-Säure, bevorzugt SnCl₂, als Vernetzungsmittel eingesetzt werden. Als Cl-haltige Lewis-Säure wird vorzugsweise ZnCl₂ oder SnCl₂ eingesetzt, wobei es bevorzugt ist, dass bei dem Einsatz von SnCl₂ zusätzlich ZnO eingesetzt wird. Alternativ zu den genannten Lewis-Säuren kann auch eine Mischung aus Chloropren-Kautschuk und ZnO eingesetzt werden. Im Fall der Verwendung von bromierten Phenolharzen ist der Einsatz einer Lewis-Säure vorzugsweise nicht notwendig, allerdings wird dann vorzugsweise zusätzlich ZnO eingesetzt. Hierfür geeignete Phenolharze sind dem Fachmann bekannt, und werden üblicherweise durch Umsetzung von Phenol mit Aldehyden erhalten (Phenol-Formaldehydharz). Hierfür geeignete Phenolharze sind zum Beispiel die Umsetzungsprodukte von Octylphenol mit Formaldehyd, z.B. ist SP-1045 H (SP-1045, HRJ-10518 H von Schenectady International Inc.) geeignet, das ein Octylphenol-Formaldehydharz ist, das Methylolgruppen enthält, oder im Falle von bromierten Phenolharzen bromierte Octylphenolharze, beispielsweise solche mit den Handelsnamen SP-1055 oder SP-1056. Geeignete Cl-haltige Lewis-Säuren sind dem Fachmann bekannt. Bevorzugt wird SnCl₂ oder Chloropren-Kautschuk eingesetzt.

Bei einem Einsatz der Kombination mindestens eines Phenolharzes mit mindestens einer Cl-haltigen Lewis-Säure, bevorzugt SnCl₂, wird vorzugsweise das mindestens eine Phenolharz in einer Menge von 2 bis 5 Gew.-%, bezogen auf das Gesamtgewicht der thermoplastischen Elastomerzusammensetzung eingesetzt, und die Cl-haltige Lewis-Säure vorzugsweise in einer Menge von 0,2 bis 0,7 Gew.-%, bezogen auf das Gesamtgewicht der thermoplastischen Elastomerzusammensetzung, eingesetzt.

Die Vernetzung mithilfe von Schwefel ist eine der ältesten Vernetzungsmöglichkeiten von Kautschuken, die dem Fachmann auf diesem Gebiet bekannt ist.

### Komponente E: Covernetzer

In einer bevorzugten erfindungsgemäßen Ausführungsform enthalten die thermoplastischen Elastomerzusammensetzungen zusätzlich mindestens einen Covernetzer als Komponente E. Der Covernetzer wird erfindungsgemäß vorzugsweise in einem Gewichtsverhältnis Elastomer zu Covernetzer im Bereich von 100:10 bis 100:2 und stärker bevorzugt im Bereich von 100:8 bis 100:3 eingesetzt.

Geeignete Covernetzer für Peroxide als Vernetzungsmittel sind zum Beispiel aus der Gruppe bestehend aus Triallylisocyanurat (TAIC) (z.B. DIAK™-7 von DuPont), Trimethylolpropantrimethacrylat (TRIM) (z.B. Rhenogran® TRIM S von Rheinchemie), N,N'-m-Phenylendimaleimid (z. B. HVA™-2 von DuPont Dow), Triallylcyanurat (TAC), flüssiges Polybutadien (z. B. Ricon® D153 von Ricon Resins), p-Chinodixon, p,p'-Dibenzoylchinodioxin, N-Methyl-N,N-dinitrosoanilin, Nitrobenzol, Diphenylguanidin, Trimethylolpropan-N,N'-m-phenylenmaleimid, N-Methyl-N,N'-m-phenylendimaleimid, Divinylbenzol, polyfunktionellen Methacrylatmonomeren wie Ethylenglykoldimethacrylat, Diethylenglykoldimethacrylat, Polyethylenglykoldimethacrylat, Trimethylolpropantrimethacrylat und Allylmethacrylat, und polyfunktionellen Vinylmonomeren wie Vinylbutyrat und Vinylstearat. Bevorzugt eingesetzte Covernetzer sind ausgewählt aus der Gruppe bestehend aus Trimethylolpropantrimethacrylat (TRIM), Triallylisocyanurat (TAIC), N,N'-m-Phenylendimaleimid, Triallylcyanurat (TAC) und flüssigem Polybutadien. Besonders bevorzugt wird Trimethylolpropantrimethacrylat (TRIM) als Covernetzer eingesetzt. Es ist möglich, in den erfindungsgemäßen vernetzbaren Zusammensetzungen einen Covernetzer oder zwei oder mehr Covernetzer gemeinsam einzusetzen.

### Komponente F: Weichmacher

Geeignete Weichmacher sind dem Fachmann grundsätzlich bekannt. Geeignete Weichmacher für polare Elastomere (EVM, NBR, H-NBR, AEM, ACM, etc.) sind z.B. Ester-Weichmacher, wie Phthalsäureester, beispielsweise Dioctylphthalat, Diisooctylphthalat, Dinonylphthalat oder Diisodecylphthalat; aliphatische Ester, wie Dioctylsäureester oder Dioctylsebacinsäureester; Phosphorsäureester wie Trikresylphosphorsäureester, Diphenylkresylsäureester oder Trioctylphosphat; Polyester, wie Polyphthalsäureester, Polyadepinsäureester oder Polyesterether.

Geeignete Weichmacher für unpolare Elastomere (z.B. Styrol-Butadien-Kautschuk) sind technische oder medizinische Mineral- oder Weißöle, native Öle, wie beispielsweise Soja- oder Rapsöl, ferner Alkylsulfonylester, insbesondere Alkylsulfonylphenylester, wobei die Alkylsubstituenten lineare und/oder verzweigte Alkylketten mit > 5C-Atomen enthalten. Ferner Di- oder Tri-Alkylester der Mellitsäure, wobei die Alkylsubstituenten vorzugsweise lineare und/oder verzweigte Alkylketten mit > 4 C-Atomen enthalten. Des Weiteren finden auch Alkylester von Di-, Tri- und höheren Polycarbonsäuren, wobei die Alkylsubstituenten vorzugsweise lineare und/oder verzweigte Alkylketten sind, als entsprechende Weichmacher Verwendung. Als Beispiele seien genannt: Adipinsäure-di-2-ethylhexylester und Tributyl-O-acetylcitrat. Weiterhin können auch Carbonsäureester von Mono- und/oder Polyalkylenglycolen als Weichmacher eingesetzt werden, wie beispielsweise Ethylenglycoladipat.

Als geeignete Weichmacher können auch Mischungen der beschriebenen Substanzklassen eingesetzt werden.

### Komponente G: Stabilisatoren, Hilfsstoffe und Farbstoffe (Additive)

Geeignete Additive sind z.B. Verarbeitungshilfsstoffe, Metallseifen, Fettsäuren und Fettsäurederivate, Faktis ([Kunstwort]: kautschukähnlicher Soff, der z.B. durch Einwirken von Schwefel oder Schwefelchlorid auf trocknende Öle gewonnen wird; dient zum Strecken von Kautschuk), Alterungs-, UV- oder Ozonschutzmittel wie Ozonschutzwachse, Antioxidantien, z.B. Polycarbodiimide (z.B. Rhenogran®, PCD-50), substituierte Phenole, substituierte Bisphenole, Dihydrochinoline, Diphenylamine, Phenylnaphthylamine, Paraphenylendiamine, Benzimidazole, Paraffinwachse, mikrokristalline Wachse, Pigmente, Farbstoffe wie Titandioxid, Litophone, Zinkoxid, Eisenoxid, Ultramarinblau, Chromoxid, Antimonsulfit; Stabilisatoren wie Wärmestabilisatoren, Stabilisatoren gegen Bewitterung; Oxidationsschutzmittel, z.B. p-Dicumyldiphenylamin (z.B. Naugard® 445), styrolisiertes Diphenylamin (z.B. Vulcanox® DDA), Zinksalz von Methylmercaptobenzimidazol (z.B. Vulcanox® ZMB2), polymerisiertes 1,2-Dihydro-2,2,4-trimethylchinolin (z.B. Vulcanox® HS), Thiodiethylen-bis(3,5-di-tert-butyl-4-hydroxy)hydrocinamat, Tiodiethylen-bis[3-(3,5-di-tert-butyl-4-hydroxyphenyl)propionat] (z.B. Irganox® 1035), Gleitmittel, Entformungsmittel, Antiflammmittel (Flammschutzmittel), Haftvermittler, Markierungsstoffe, Mineralien sowie Kristallisationsbeschleuniger und -verzögerer.

Als Prozesshilfsstoffe und Stabilisatoren können die folgenden verwendet werden: Antistatika, Antischäummittel, Gleitmittel, Dispergiermittel, Trennmittel, Anti-Blocking-Agentien, Radikalfänger, Antioxidantien, Biozide, Fungizide, UV-Stabilisatoren, sonstige Lichtschutzmittel, Metalldesaktivatoren, des weiteren auch Additive wie Schäumhilfen, Treibmittel, Flammschutzmittel, Rauchgasunterdrücker, Schlagzähmodifikatoren, Haftmittel, Anti-Fogging-Mittel, Farbstoffe, Farbpigmente, Farbmasterbatches, Viskositätsmodifikatoren und Mittel zum Alterungsschutz.

Besonders bevorzugt werden als Hilfsstoffe Stabilisatoren und Alterungsschutzmittel eingesetzt.

### Komponente H: Füllstoffe

Geeignete Füllstoffe sind z.B. Ruß, Kreide (Calciumcarbonat), Kaolin, Kieselerde, Talkum (Magnesiumsilicat), AluminiumoxidHydrat, Aluminiumsilicat, Calciumcarbonat, Magnesiumcarbonat, Calciumsilicat, Magnesiumsilicat, Bariumsulfat, Zinkcarbonat, calciniertes Kaolin (z.B. Polestar® 200 P), Calciumoxid, Magnesiumoxid, Titanoxid, Aluminiumoxid, Zinkoxid, silanisierte Kaoline, silanisiertes Silicat, beschichtete Kreide, behandelte Kaoline, pyrogene Kieselsäure, hydrophobierte pyrogene Kieselsäure (z.B. Aerosil® 972), synthetische amorphe Fällungskieselsäure (Silica), Industrieruß, Graphit, nanoskalige Füllstoffe wie Kohlenstoff-Nanofibrillen, Nanoteilchen in Plättchenform oder nanoskalige Siliciumdioxid-Hydrate und Mineralien.

Herstellung der erfindungsgemäßen Zusammensetzungen und Vernetzen oder Mischen zu thermoplastischen Elastomerzusammensetzungen:
Die thermoplastischen Elastomerzusammensetzungen gemäß der vorliegenden Erfindung können durch Mischen der Komponenten A, B, C, D, E, F, G und H - soweit sie in den Zusammensetzungen vorliegen - hergestellt werden. Die Mischung kann dabei unter Verwendung von in der Kautschuktechnologie und Kunststofftechnologie bekannten Mischsystemen wie Knetern, Innenmischern, z. B. Innenmischern mit ineinander greifender oder tangierender Rotorgeometrie, sowie auch in kontinuierlich mischenden Anlagen wie Mischextrudern, z. B. Mischextrudern mit 2 bis 4 und mehr Wellenschnecken (z.B. Doppelschneckenextrudern, erfolgen.

Bei der Durchführung des erfindungsgemäßen Herstellungsverfahrens ist es wichtig, darauf zu achten, dass die Mischungstemperatur hoch genug ist, dass die Komponenten B und C in den plastischen Zustand überführt werden können, jedoch dabei nicht geschädigt werden. Dies wird gewährleistet, wenn eine Temperatur oberhalb der höchsten Schmelz- oder Erweichungstemperatur der Komponente B und C gewählt wird. Besonders bevorzugt wird das Mischen der Komponenten - soweit sie in den Zusammensetzungen vorliegen - bei einer Temperatur im Bereich von 150°C bis 350°C, bevorzugt 150°C bis 280°C, besonders bevorzugt 170°C bis 240°C vorgenommen.

Grundsätzlich sind verschiedene Varianten zum Mischen der einzelnen Komponenten möglich.

Variante 1: A, B, C, D, E, F, G und H werden - sofern in der erfindungsgemäßen Zusammensetzung enthalten - gemeinsam vorgelegt und bei Temperaturen oberhalb der höchsten Schmelz- oder Erweichungstemperaturen der Komponenten B und C innig vermischt.

Variante 2: A, B, C, F, G und H werden - sofern in der erfindungsgemäßen Zusammensetzung enthalten - gemeinsam vorgelegt und bei Temperaturen oberhalb der höchsten Schmelz- oder Erweichungstemperaturen der Komponenten B und C innig vermischt. Anschließend werden die Komponenten D und E (soweit sie in der erfindungsgemäßen Rezeptur vorliegen) zugegeben und weiter bei Erhalt der erreichten Temperatur gemischt.

Variante 3: A, D, E, F, G und H werden - sofern in der erfindungsgemäßen Zusammensetzung enthalten - gemeinsam vorgelegt und innig bis unterhalb der Reaktionstemperatur von D gemischt. Dann werden die Komponenten B und C zugegeben und auf Erweichungstemperatur von B und C bei anhaltendem Mischen erhitzt. Die Zugabe von B und C kann oberhalb oder unterhalb der Erweichungstemperatur von B und C erfolgen.

Variante 4: B, C und H werden - sofern in der erfindungsgemäßen Zusammensetzung enthalten - gemeinsam vorgelegt und bei Temperaturen oberhalb der höchsten Schmelz- oder Erweichungstemperaturen der Komponenten B und C innig vermischt. Die Komponenten A, D, E, F und G werden (sofern in der erfindungsgemäßen Rezeptur enthalten) zugegeben und oberhalb der höchsten Schmelz- oder Erweichungstemperaturen der Komponenten B und C innig weiter vermischt.

Besonders bevorzugt ist Variante 1 für die Herstellung auf dem Innenmischer. Variante 3 ist besonders bevorzugt für die Herstellung auf kontinuierlichen Mischanlagen.

Durch die vorstehend genannten Verfahrensvarianten, insbesondere durch die Verfahrensvariante 1 und 3 wird erreicht, dass die Komponente A, und die Komponenten B und C nach dem Abschluss der Herstellung eine möglichst feine und gleichmäßige Verteilung erfahren haben.

Die Zugabezeit, Temperatur, Form und Menge der Komponenten D und E sollte darüber hinaus so gewählt sein, dass eine gute Verteilung der Komponenten D und gegebenenfalls E in der Elastomerphase gewährleistet ist, die Elastomer- und Thermoplastphase (B,C) in dem oben beschriebenen Zustand vorliegen und erst dann die Vernetzung der Elastomerphase erfolgt, so dass eine Phasenumkehr erfolgt oder eine co-kontinuierliche Phasenstruktur der elastomeren Phase und der thermoplastischen Phase erfolgt.

In dem erfindungsgemäßen Verfahren ist es bevorzugt, dass gemäß der angegebenen Variante 3 das Elastomer mit einer Mischung aus einem Polypropylen und einem thermoplastischen Elastomer auf Polyolefin-Blockcopolymer-Basis (TPO) in einem Extruder, einem Innenmischer oder einem Kneter, vorzugsweise in einem Doppelschnecken-Extruder, vermengt wird.

In dem erfindungsgemäßen Verfahren der Variante 3 wird vorzugsweise in einem ersten Verfahrensschritt das Elastomer zunächst vorbehandelt, und in einem zweiten Verfahrensschritt wird eine Mischung aus nicht-elastomerem Polyolefin und TPO hinzugegeben.

In dem ersten Schritt ist es bevorzugt, dass das Elastomer in einem Extruder, einem Innenmischer oder einem Kneter, vorzugsweise in einem Doppelschnecken-Extruder, vorbehandelt wird. Unter "Vorbehandeln" versteht man vorzugsweise, dass das Elastomer erweicht wird, vorzugsweise bei einer Temperatur im Bereich von 50°C bis 120°C, stärker bevorzugt im Bereich von 80°C bis 110°C. Diese Vorbehandlung erfolgt vorzugsweise in einem der angegebenen Geräte. Dieses Prozedere ist dem Fachmann bekannt unter dem Begriff "Mastikation". Dabei wird vorzugsweise zusätzlich zu dem Elastomer ein Vernetzungsmittel eingesetzt, so dass das erweichte Elastomer zusammen mit einem Vernetzungsmittel vermischt wird. Zusätzlich zu dem Elastomer und dem Vernetzungsmittel kann noch ein Covernetzer, ein Weichmacher oder eines der weiter oben angegebenen Additive zugesetzt werden. Das Vernetzungsmittel, der Covernetzer, der Weichmacher beziehungsweise die weiteren Additive sind vorzugsweise solche, wie sie weiter oben in Verbindung mit der erfindungsgemäßen thermoplastischen Elastomerzusammensetzung genannt sind.

Weiterhin ist es bevorzugt, dass in dem erfindungsgemäßen Verfahren vorzugsweise gemäß Variante 3 vor dem zweiten Schritt, d.h. vorzugsweise parallel zu dem ersten Verfahrensschritt die Mischung aus einem nicht-elastomeren Polyolefin und TPO hergestellt wird. Diese Mischung wird vorzugsweise ebenso in einem Extruder, einem Innenmischer oder einem Kneter, vorzugsweise in einem Doppelschnecken-Extruder hergestellt. Dabei ist es bevorzugt, dass die Mischung aus dem nicht-elastomerem Polyolefin und TPO bei einer Temperatur im Bereich von 160°C bis 280°C, stärker bevorzugt 200°C bis 260°C hergestellt wird.

Wie bereits erwähnt wird nach dem zweiten Verfahrensschritt, d.h. der Zugabe der Mischung aus dem nicht-elastomeren Polyolefin und TPO zu dem Elastomer die resultierende Zusammensetzung vermengt. In anderen Worten wird in einem dritten Verfahrensschritt das Gemenge aus Elastomer und der Mischung aus nicht-elastomerem Polyolefin und TPO sowie den eventuell weiteren Komponenten vorzugsweise extrudiert, stärker bevorzugt bei einer Temperatur im Bereich von 180°C bis 260°C, stärker bevorzugt in einem Bereich von 200°C bis 240°C. In einem vierten Verfahrensschritt erfolgt vorzugsweise das Kneten des aus dem dritten Verfahrensschritt erhaltenen Gemenges.

Die erfindungsgemäßen Zusammensetzungen eignen sich hervorragend zur Bereitstellung thermoplastischer Elastomere mit ausgewogenen Eigenschaften, insbesondere mit sehr guter Temperatur- und chemischer Beständigkeit bei gleichzeitig sehr guten elastischen Eigenschaften (Druckverformungsrest, Bruchdehnung und Zugfestigkeit) in einem weiten Härtebereich. Zudem weisen sie eine hervorragende Haftung zu Polyolefinen (insbesondere Polypropylenen) auf.

Gemäß der vorliegenden Erfindung wird das Elastomer während oder nach dem Vermengen mit der Mischung aus nicht-elastomerem Polyolefin und TPO vernetzt, d.h. die Vernetzung erfolgt dynamisch. Die Vernetzung der vorzugsweise dispersen elastomeren Phase (Elastomer) erfolgt vorzugsweise während der Mischung der Komponenten A bis H (soweit diese in der Mischung vorliegen). Die Vernetzung setzt vorzugsweise ein, wenn das Vermengen bei einer Temperatur oberhalb der Schmelz- oder Erweichungstemperatur der Komponenten B und C in Anwesenheit der Komponenten D und gegebenenfalls E über einen Zeitraum von mindestens 15 sec fortgeführt wird.

Nach erfolgter Phasenumkehr bzw. Ausbildung einer cokontinuierlichen Phase wird das erhaltene Produkt, d. h. die thermoplastische Elastomerzusammensetzung, vorzugsweise auf eine Temperatur unterhalb der Schmelz- oder Erweichungstemperatur des oder der Komponenten B und C abgekühlt.

Ein weiterer Gegenstand der vorliegenden Erfindung sind thermoplastische Elastomerzusammensetzungen, die durch die erfindungsgemäßen Verfahren erhältlich sind.

Die in der vorliegenden Anmeldung verwendeten Begriffe "umfassen", "enthalten" und "aufweisen" sollen auch in jedem Fall, in dem sie verwendet werden, den Begriff "bestehen aus" mitumfassen, so dass diese Ausführungsformen auch in dieser Anmeldung offenbart sind.

Weiterhin betrifft die vorliegende Erfindung auch folgende Aspekte:
Ein erster Aspekt betrifft eine thermoplastische Elastomerzusammensetzung, die ein Elastomer, ein nicht-elastomeres Polyolefin und ein thermoplastisches Elastomer auf Polyolefin-Blockcopolymer-Basis (TPO) enthält, wobei das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, epoxidierter Naturkautschuk und einer Mischung aus zwei oder mehreren der genannten Elastomere besteht, wobei das Elastomer als unvernetztes Elastomer oder als dynamisch vernetztes Elastomer vorliegt.
Ein zweiter Aspekt betrifft die thermoplastische Elastomerzusammensetzung nach Aspekt 1, worin das Elastomer ein Elastomer umfasst, das aus der Gruppe von Elastomeren ausgewählt ist, die aus Ethylen-Vinylacetat-Copolymer, Nitrilbutadien-Kautschuk und einer Mischung aus den genannten Elastomeren besteht.
Ein dritter Aspekt betrifft die thermoplastische Elastomerzusammensetzung nach Aspekt 1 oder 2, die zusätzlich ein Vernetzungsmittel aufweist.
Ein vierter Aspekt betrifft die thermoplastische Elastomerzusammensetzung nach einem der Aspekt 1 bis 3, worin das Elastomer als dynamisch vernetztes Elastomer vorliegt.
Ein fünfter Aspekt betrifft die thermoplastische Elastomerzusammensetzung nach einem der Aspekte 1 bis 4, worin eine Mischung aus dem nicht-elastomeren Polyolefin und dem TPO die Matrix darstellt, in die das Elastomer eingebettet vorliegt.
Ein sechster Aspekt betrifft die thermoplastische Elastomerzusammensetzung nach einem der Aspekte 1 bis 5, worin das TPO ein Blockcopolymer ist, das mindestens zwei verschiedene Alkylen-Einheiten aufweist.
Ein siebter Aspekt betrifft die thermoplastische Elastomerzusammensetzung nach einem der Aspekte 1 bis 6, worin das Gewichtsverhältnis von Elastomer zu nicht-elastomeren Polyolefin im Bereich von 100:15 bis 100:60 liegt.
Ein achter Aspekt betrifft die thermoplastische Elastomerzusammensetzung nach einem der Aspekte 1 bis 7, worin das Gewichtsverhältnis von Elastomer zu TPO im Bereich von 100:5 bis 100:45 liegt.
Ein neunter Aspekt betrifft die thermoplastische Elastomerzusammensetzung nach einem der Aspekte 1 bis 8, worin das Verhältnis des Gewichts von dem Elastomer zu der Summe der Gewichte von nicht-elastomerem Polyolefin und TPO im Bereich von 100:25 bis 100:65 liegt.
Ein zehnter Aspekt betrifft die thermoplastische Elastomerzusammensetzung nach einem der Aspekte 1 bis 9, die zusätzlich einen Weichmacher enthält.
Ein elfter Aspekt betrifft die thermoplastische Elastomerzusammensetzung nach einem der Aspekte 1 bis 10, die zusätzlich weitere Additive enthält.
Ein zwölfter Aspekt betrifft die Verwendung einer Mischung aus einem Elastomer und einem Vernetzungsmittel für das Elastomer zur Herstellung einer thermoplastischen Elastomerzusammensetzung gemäß einem der Aspekte 1 bis 11, worin das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, epoxcidierter Naturkautschuk und einer Mischung aus zwei oder mehreren der genannten Elastomere besteht.
Ein 13. Aspekt betrifft die Verwendung nach Aspekt 12, worin die Mischung einen Covernetzer, einen Weichmacher oder ein weiteres Additiv enthalten kann.
Ein 14. Aspekt betrifft die Verwendung einer Mischung aus einem nicht-elastomeren Polyolefin und einem thermoplastischen Elastomer auf Polyolefin-Blockcopolymer-Basis (TPO) zur Herstellung einer thermoplastischen Elastomerzusammensetzung gemäß einem der Aspekte 1 bis 11.
Ein 15. Aspekt betrifft die Verwendung einer thermoplastischen Elastomerzusammensetzung gemäß einem der Aspekte 1 bis 11 zur Herstellung eines Verbundmaterials mit Polyolefin, vorzugsweise einem Polypropylen.
Ein 16. Aspekt betrifft ein Verbundmaterial aus einem thermoplastischen Elastomer gemäß einem der Aspekte 1 bis 11 und einem Polyolefin.
Ein 17. Aspekt betrifft die Verwendung einer thermoplastischen Elastomerzusammensetzung gemäß einem der Aspekte 1 bis 11 zur Herstellung von Bauteilen oder Formkörpern im Automobilinnenbereich sowie unter der Motorhaube ("under the hood"), d.h. im Motorraum von Fahrzeugen, zur Herstellung von Industriegeräten, Industriewerkzeugen, Badarmaturen, Haushaltsgeräten, Geräten der Unterhaltungselektronik, Sportartikeln, medizinischen Verbrauchsartikeln und Geräten, Behältern für Hygieneartikel und Kosmetika und allgemein Dichtungsmaterialien.
Ein 18. Aspekt betrifft ein Verfahren zur Herstellung einer thermoplastischen Elastomerzusammensetzung gemäß einem der Aspekte 1 bis 11, worin ein Elastomer, ein nicht-elastomeres Polyolefin und ein thermoplastisches Elastomer auf Polyolefin-Blockcopolymer-Basis (TPO) vermischt werden, wobei das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, epoxidierter Naturkautschuk und einer Mischung aus zwei oder mehreren der genannten Elastomere besteht.
Ein 19. Aspekt betrifft das Verfahren nach Aspekt 18, worin das Elastomer mit einer Mischung aus dem nicht-elastomeren Polyolefin und dem thermoplastischen Elastomer auf Polyolefin-Blockcopolymer-Basis (TPO) in einem Extruder, einem Innenmischer oder einem Kneter, vorzugsweise in einem Doppelschneckenextruder, vermischt wird.
Ein 20. Aspekt betrifft das Verfahren nach Aspekt 19, worin in einem ersten Schritt das Elastomer vorbehandelt wird, und in einem zweiten Schritt die Mischung aus nicht-elastomerem Polyolefin und TPO hinzugegeben wird.
Ein 21. Aspekt betrifft das Verfahren nach Aspekt 19 oder 20, worin in dem ersten Schritt das mittels Temperatureinwirkung erweichte Elastomer bzw. das mastizierte Elastomer zusammen mit einem Vernetzungsmittel weiter vermischt bzw. mastiziert wird.
Ein 22. Aspekt betrifft das Verfahren nach einem der Aspekte 19 bis 21, worin vor dem zweiten Schritt die Mischung aus nicht-elastomerem Polyolefin und TPO in einem Extruder, einem Innenmischer oder einem Kneter, vorzugsweise in einem Doppelschneckenextruder hergestellt wird.
Ein 23. Aspekt betrifft das Verfahren nach Aspekt 21 oder 22, worin im ersten Schritt das Elastomer mit dem Vernetzungsmittel in einem Temperaturbereich von 50 °C bis 120 °C vermischt wird.
Ein 24. Aspekt betrifft das Verfahren nach Aspekt 22 oder 23, worin die Mischung aus nicht-elastomerem Polyolefin und TPO bei einer Temperatur im Bereich von 160 °C bis 280 °C hergestellt wird.
Ein 25. Aspekt betrifft das Verfahren nach einem der Aspekte 19 bis 24, worin in einem dritten Schritt das Gemenge aus Elastomer und der Mischung aus nicht-elastomerem Polyolefin und TPO sowie den evtl. weiteren Komponenten bei einer Temperatur im Bereich von 180 °C bis 260°C extrudiert wird.
Ein 26. Aspekt betrifft das Verfahren nach Aspekt 25, worin das Gemenge aus dem dritten Schritt geknetet wird.

Die vorliegende Erfindung soll nun durch die folgenden Ausführungsbeispiele genauer erläutert werden. Die folgenden Ausführungsbeispiele haben nur exemplarischen Charakter und dienen nicht dazu, die vorliegende Erfindung darauf zu beschränken.

### Beispiele:

Bestimmungsmethoden und Definitionen:
Die Bestimmung der Dichte erfolgt gemäß DIN EN ISO 1183-1.
Die Bestimmung der Shore-Härte erfolgt gemäß DIN EN ISO 868 und DIN ISO 7619-1.

Unter der Zugfestigkeit versteht man die maximale mechanische Zugspannung, die ein Werkstoff aushält, bevor er bricht/reißt. Sie wird im Zugversuch aus der maximal erreichten Zugkraft bezogen auf den ursprünglichen Querschnitt der (genormten) Probe errechnet und in N/mm² angegeben.

Die Bruchdehnung ist ein Materialkennwert, der die bleibende Verlängerung des Bruches, bezogen auf die Anfangsmesslänge, angibt. Die Bruchdehnung ist bei der Werkstoffprüfung eine von vielen Kenngrößen und charakterisiert die Verformungsfähigkeit eines Werkstoffes. Sie ist die auf die Anfangsmesslänge *L*₀ einer Probe im Zugversuch bezogene bleibende Längenänderung Δ*L* nach erfolgtem Bruch. Diese Längenänderung wird in % angegeben.

Der Druckverformungsrest ist ein Maß dafür, wie sich (thermoplastische) Elastomere bei lang andauernder, konstanter Druckverformung und anschließender Entspannung verhalten. Nach DIN ISO 815 wird der Druckverformungsrest (DVR, engl. compression set) bei konstanter Verformung gemessen. Dieser stellt den Verformungsanteil des Testmaterials dar. Viele Testverfahren für Elastomere, wie z.B. die Zugfestigkeit charakterisieren die Qualität und Beschaffenheit des Materials. Der DVR hingegen ist ein wichtiger Faktor, der vor Einsatz eines Materials für einen bestimmten Einsatzzweck beachtet werden muss. Besonders für den Einsatz von Dichtungen und Unterlegplatten aus Elastomeren ist die bleibende Verformung, der Druckverformungsrest (DVR) eine wichtige Kenngröße. Zur Bestimmung dieser Größe wird ein zylindrischer Prüfkörper um z.B. 25 % zusammengedrückt und bei bestimmter Temperatur eine gewisse Zeit so gelagert. Die Temperatur und das Medium (meist Luft, aber auch Öle und andere Gebrauchsflüssigkeiten) für den Druckverformungstest hängt von dem zu testenden Material, seinem geplanten Einsatzzweck und dem Versuchsaufbau ab (z.B. 24 h bei 150 °C). 30 Minuten nach der Entlastung wird bei Raumtemperatur wieder die Höhe gemessen und daraus die bleibende Verformung ermittelt. Ein Druckverformungsrest von 0 % bedeutet, dass der Körper seine ursprüngliche Dicke wieder voll erreicht hat, ein DVR von 100 % sagt, dass der Körper während des Versuchs völlig verformt wurde und keine Rückstellung zeigt. Die Berechnung erfolgt nach folgender Formel: DVR (%) = (L₀ - L₂ ) / (L₀ - L₁) x 100 %, wobei:
DVR = Druckverformungsrest in %
L₀ = Höhe des Probekörpers vor der Prüfung
L₁ = Höhe des Probekörpers während der Prüfung (Distanzstück)
L₂ = Höhe des Probekörpers nach der Prüfung.

Weiterhin wurde die Kraft in MPa gemäß DIN ISO 34-1 gemessen, die benötigt wird, um das thermoplastische Elastomer um 100%, 200% bzw. 300% zu dehnen. Hierbei wird ein Körper - wie er in der genannten Norm definiert ist - genommen und unter Messung der benötigten Kraft um die angegebene Länge gedehnt.

Die Bestimmung der Weiterreißfähigkeit erfolgt gemäß DIN 53504/ISO 37.

Der Abrieb der thermoplastischen Elastomerzusammensetzungen wird gemessen, indem ein 6 mm hoher Zylinder mit 16 mm Durchmesser über 40 m Schmirgelpapier mit Körnung 60 mit einem Anpressdruck von 10 N gerieben wird.

Die Haftung der thermoplastischen Elastomerzusammensetzungen auf Polypropylen (Typ: Moplen® HP501L; Hersteller: Basell Polyolefins) wird gemäß VDI2019 bestimmt.

### Ausführungsbeispiele:

Tabelle 1 gibt die verwendeten Abkürzungen für die in den Beispielen eingesetzten Komponenten an:

**Tabelle 1:**

| **Komponente** | **Rohstoff** |
|---|---|
| A | Elastomer (Kautschuk) |
| B | nicht-elastomeres Polyolefin |
| C | Thermoplastisches Elastomer auf Polyolefin-Blockcopolymer-Basis |
| D | Vernetzungsmittel |
| E | Covernetzer |
| F | Weichmacher |
| G | Stabilisator, Hilfsstoff und Farbstoff |
| H | Füllstoff |

Beispiele 1 und 2: Herstellung von Zusammensetzungen erfindungsgemäßer thermoplastischer Elastomere auf EVM- und NBR-Basis :
Es wird gemäß der oben genannten Herstellungsvariante 3 eine thermoplastische Elastomerzusammensetzung mit den aus Tabellen 2 und 3 ersichtlichen Bestandteilen hergestellt. Für das Vermengen der eingesetzten Komponenten wird ein Doppelschneckenextruder verwendet. In Tabelle 4 sind die mechanischen Meßwerte angegeben. Die Tabellen 5 bis 7 geben die mechanischen Werte nach Behandlung in diversen Medien an.

**Tabelle 2:**

| **Zusammensetzungen** | | | |
|---|---|---|---|
| | | **Beispiel 1** | **Beispiel 2** |
| Rohstoff | Komponente | | |
| Elastomer (NBR) | A1 | 100 | |
| Elastomer (EVM) | A2 | | 100 |
| nicht-elastomeres Polyolefin | B | 20 | 16,7 |
| TPO | C | 10 | 8,3 |
| Vernetzer (10 Gew.-% Peroxid) | D | 11 | 13,5 |
| Covernetzer | E | 6 | 6 |
| Weichmacher | F | 25 | 25 |
| Stabilisation, Hilfsstoffe und Farbe: | G | | |
| Additiv 1 | | 0,46 | 0,4 |
| Additiv 2 | | 0,24 | 0,24 |
| Additiv 3 | | 0,24 | 0,25 |
| Additiv 4 | | 0,2 | 0,2 |
| Additiv 5 | | 0,1 | |
| Additiv 6 | | 1 | |
| Additiv 7 | | 1 | |
| Additiv 8 | | 1 | |
| Additiv 9 | | 3 | 3 |
| Additiv 10 | | 1,5 | 3 |
| Additiv 11 | | 0,3 | 0,4 |
| Füllstoff | H | 4 | 4 |

**Tabelle 3:**

| **Eingesetzte Rohstoffe** | | | |
|---|---|---|---|
| | | | |
| **Rohstoff** | **Komponente** | **Hersteller** | **Typ** |
| Elastomer (NBR) | A1 | Lanxess | Perbunan 3446 F |
| Elastomer (EVM) | A2 | Lanxess | EVM 600 |
| nicht-elastomeres Polyolefin | B | Lyondell Basell | Moplen HP500 N |
| TPO | C | Lyondell Basell | Hifax CA 10A |
| Vernetzungsmittel | D | Pergan | Peroxan HXY10PSVP796 |
| Covernetzer | E | Kettlitz | PerTAC-GR |
| Weichmacher | F | Safic Alkan | Edenol T810T |
| Stabilisation, Hilfsstoffe und | G | | |
| Farbe: | | | |
| Additiv 1 | | BASF | Tinuvin 326 |
| Additiv 2 | | BASF | Chimasorb 944 FDL |
| Additiv 3 | | BASF | Tinuvin 622 SF |
| Additiv 4 | | BASF | Irganox 1330 |
| Additiv 5 | | BASF | Irganox 3052 FF |
| Additiv 6 | | Nordmann,Rassmann | Quantox-45 |
| Additiv 7 | | Lanxess | Vulkazon AFS-LG |
| Additiv 8 | | Rhein Chemie | Antililux 654 |
| Additiv 9 | | Rhein Chemie | Rhenogran PCD-50 EVA |
| Additiv 10 | | Lanxess | Vulkanox HS LG |
| Additiv 11 | | BASF | Irgafos 168 |
| Füllstoffe | H | Bayer | ZnO Aktiv |

**Tabelle 4:**

| **Mechanische Werte** | | | |
|---|---|---|---|
| | | **Beispiel 1** | **Beispiel 2** |
| **Wert** | **Einheit** | | |
| Dichte | g/cm³ | 1,015 | 1,056 |
| Härte | ShA | 73 | 59 |
| Zugfestigkeit | N/mm² | 5,8 | 7,0 |
| Bruchdehnung | % | 353 | 332 |
| 100% | MPa | 3,0 | 2,5 |
| 200% | MPa | 3,9 | 4,3 |
| 300% | MPa | 5,1 | 6,4 |
| Weiterreißfähigkeit | N/mm² | 20 | 15,3 |
| Druckverformungsrest bei 25°C/22h | % | 32,0 | 31,0 |
| Druckverformungsrest bei 70°C/22h | % | 34,0 | 31,0 |
| Druckverformungsrest bei 100°C/22h | % | 39,5 | 30,5 |
| Druckverformungsrest bei 120°C/22h | % | 49,5 | 35,5 |
| Druckverformungsrest bei 140°C/22h | % | 67, 0 | 52,0 |
| Druckverformungsrest bei 150°C/22h | % | 76,0 | 59,5 |
| Haftung auf PP | N/mm² | 6 | 6 |
| Abrieb | mm³ | 422 | 317 |

| | | | |
|---|---|---|---|
| Die Werte für Dichte, Harte, Zugfestigkeit, Bruchdehnung, Dehnkraft(100%, 200%, 300%) und Weiterreißfähigkeit sind bei Raumtemperatur aufgenommen. | | | |

**Tabelle 5:**

| gemessene Größe | Zeitraum der Behandlung | Medium | Temperatur | Beispiel 1 | Beispiel 2 |
|---|---|---|---|---|---|
| Dichte Δ% | Startwert | | | 0,0 | 0,0 |
| | 1 Woche | | | -3,5 | 2,2 |
| | 3 Wochen | | | -0,2 | 3,6 |
| Gewicht Δ% | Startwert | | | 0,0 | 0,0 |
| | 1 Woche | | | -0,8 | -4,6 |
| | 3 Wochen | | | -1,7 | -5,2 |
| Volumen Δ% | Startwert | | | 0,0 | 0,0 |
| | 1 Woche | | | -4,3 | -2,5 |
| | 3 Wochen | | | -1,9 | -1,8 |
| Härte (ShA) | Startwert | | | 73 | 60 |
| | 1 Woche | | | 76 | 60 |
| | 3 Wochen | | | 73 | 59 |
| Zugfestigkeit (N/mm²) | Startwert | | | 6,6 | 6,8 |
| | 1 Woche | IRM 901 | 100°C | 5,1 | 5,5 |
| | 3 Wochen | | | 4,1 | 4,9 |
| Bruchdehnung (%) | Startwert | | | 414 | 366 |
| | 1 Woche | | | 287 | 278 |
| | 3 Wochen | | | 151 | 250 |
| 100% (MPa) | Startwert | | | 3,1 | 2,3 |
| | 1 Woche | | | 3,3 | 2,4 |
| | 3 Wochen | | | 3,6 | 2,4 |
| 200% (MPa) | Startwert | | | 3,9 | 3,9 |
| | 1 Woche | | | 4,3 | 4,2 |
| | 3 Wochen | | | 0,0 | 4,2 |
| 300% (MPa) | Startwert | | | 4,9 | 5,8 |
| | 1 Woche | | | 0,0 | 0,0 |
| | 3 Wochen | | | 0,0 | 0,0 |

**Tabelle 6:**

| gemessene Größe | Zeitraum der Behandlung | Medium | Temperatur | Beispiel 1 | Beispiel 2 |
|---|---|---|---|---|---|
| Dichte Δ% | Startwert | | | 0,0 | 0,0 |
| | 1 Woche | | | 10,5 | 44,9 |
| | 3 Wochen | | | 6,5 | 40,4 |
| Gewicht Δ% | Startwert | | | 0,0 | 0,0 |
| | 1 Woche | | | -2,6 | -10,1 |
| | 3 Wochen | | | -2,3 | -9,7 |
| Volumen Δ% | Startwert | | | 0,0 | 0,0 |
| | 1 Woche | | | 7,6 | 30,3 |
| | 3 Wochen | | | 4,1 | 26,7 |
| Härte (ShA) | Startwert | | | 73 | 60 |
| | 1 Woche | | | 65 | 41 |
| | 3 Wochen | | | 68 | 42 |
| Zugfestigkeit (N/mm²) | Startwert | | | 6,6 | 6,8 |
| | 1 Woche | Diesel | RT | 4,6 | 2,6 |
| | 3 Wochen | | | 5,0 | 2,7 |
| Bruchdehnung (%) | Startwert | | | 414 | 366 |
| | 1 Woche | | | 341 | 191 |
| | 3 Wochen | | | 347 | 192 |
| 100% (MPa) | Startwert | | | 3,1 | 2,3 |
| | 1 Woche | | | 2,3 | 1,5 |
| | 3 Wochen | | | 2,6 | 1,5 |
| 200% (MPa) | Startwert | | | 3,9 | 3,9 |
| | 1 Woche | | | 3,2 | 0,0 |
| | 3 Wochen | | | 3,4 | 0,0 |
| 300% (MPa) | Startwert | | | 4,9 | 5,8 |
| | 1 Woche | | | 4,2 | 0,0 |
| | 3 Wochen | | | 4,4 | 0,0 |

**Tabelle 7:**

| gemessene Größe | Zeitraum der Behandlung | Medium | Temperatur | Beispiel 1 | Beispiel 2 |
|---|---|---|---|---|---|
| Dichte Δ% | Startwert | | | 0,0 | 0,0 |
| | 1 Woche | | | -1,5 | 3,0 |
| | 3 Wochen | | | -1,5 | 3,5 |
| | 6 Wochen | | | -2,0 | 3,6 |
| Gewicht Δ% | Startwert | | | 0,0 | 0,0 |
| | 1 Woche | | | 0,6 | -3,4 |
| | 3 Wochen | | | 0,5 | -3,7 |
| | 6 Wochen | | | 0,7 | -4,1 |
| Volumen Δ% | Startwert | | | 0,0 | 0,0 |
| | 1 Woche | | | -0,9 | -0,4 |
| | 3 Wochen | | | -1,0 | -0,4 |
| | 6 Wochen | Luft | 100°C | -1,3 | -0,6 |
| Härte (ShA) | Startwert | | | 73 | 60 |
| | 1 Woche | | | 76 | 63 |
| | 3 Wochen | | | 76 | 61 |
| | 6 Wochen | | | 78 | 63 |
| Zugfestigkeit (N/mm²) | Startwert | | | 6,6 | 6,8 |
| | 1 Woche | | | 6,4 | 6,6 |
| | 3 Wochen | | | 5,9 | 6,6 |
| | 6 Wochen | | | 5,9 | 6,7 |
| Bruchdehnung (%) | Startwert | | | 414 | 366 |
| | 1 Woche | | | 333 | 315 |
| | 3 Wochen | | | 291 | 330 |
| | 6 Wochen | | | 230 | 317 |

**Tabelle 8:**

| gemessene Größe | Zeitraum der Behandlung | Medium | Temperatur | Beispiel 1 | Beispiel 2 |
|---|---|---|---|---|---|
| 100% (MPa) | Startwert | Luft | 100°C | 3,1 | 2,3 |
| | 1 Woche | | | 3,5 | 2,6 |
| | 3 Wochen | | | 3,5 | 2,5 |
| | 6 Wochen | | | 4,0 | 2,7 |
| 200% (MPa) | Startwert | | | 3,9 | 3,9 |
| | 1 Woche | | | 4,6 | 4,6 |
| | 3 Wochen | | | 4,7 | 4,3 |
| | 6 Wochen | | | 5,5 | 4,6 |
| 300% (MPa) | Startwert | | | 4,9 | 5,8 |
| | 1 Woche | | | 6,0 | 6,5 |
| | 3 Wochen | | | 0,0 | 6,2 |
| | 6 Wochen | | | 0,0 | 6, 6 |

Beispiele 3 bis 6: Herstellung von Zusammensetzungen erfindungsgemäßer thermoplastischer Elastomere auf SBR- und NR-Basis :
Es wird gemäß der oben genannten Herstellungsvariante 3 eine thermoplastische Elastomerzusammensetzung mit den aus Tabellen 9 und 10 ersichtlichen Bestandteilen hergestellt. Für das Vermengen der eingesetzten Komponenten wird ein Doppelschneckenextruder verwendet.

Sowohl die TPE auf SBR-Basis als auch die TPE auf NR-Basis ergeben homogene Mischungen mit guten Haftungseigenschaften auf Polypropylen. Exemplarisch hierfür sind in Tabelle 11 die mechanischen Meßwerte und die Werte für die Haftung auf Polypropylen für die TPE auf SBR-Basis angegeben.

**Tabelle 9:**

| **Zusammensetzungen** | | | | | |
|---|---|---|---|---|---|
| | | **Beispiel 3** | **Beispiel 4** | **Beispiel 5** | **Beispiel 6** |
| Rohstoff | Komponente | | | | |
| Elastomer (SBR) | A1 | 100 | 100 | | |
| Elastomer (NR) | A2 | | | 100 | 100 |
| nicht-elastomeres Polyolefin | B | 26,7 | 26,7 | 26,7 | 26,7 |
| TPO | C | 13,3 | 13,3 | 13,3 | 13,3 |
| Vernetzer | D | 10 | 10 | 10 | 10 |
| Weichmacher | F | 40 | 40 | 40 | 40 |
| Stabilisation, Hilfsstoffe und Farbe: | G | | | | |
| Additiv 1 | | 0,3 | 0,3 | 0,3 | 0,3 |
| Additiv 2 | | 0,1 | 0,1 | 0,1 | 0,1 |
| Additiv 3 | | 0,32 | 0,32 | 0,32 | 0,32 |
| Additiv 4 | | 0,1 | 0,1 | 0,1 | 0,1 |
| Additiv 5 | | | 8 | | 8 |
| | | | | | |
| Füllstoff | H | 4 | 4 | 4 | 4 |

**Tabelle 10:**

| **Eingesetzte Rohstoffe** | | | |
|---|---|---|---|
| | | | |
| **Rohstoff** | **Komponente** | **Hersteller** | **Typ** |
| Elastomer (SBR) | A1 | synthos | Kralex SBR 1502 |
| Elastomer (NR) | A2 | Weber & Schaer | Natural Rubber SIR 20 |
| nicht-elastomeres Polyolefin | B | Lyondell Basell | Moplen HP500 N |
| TPO | C | Lyondell Basell | Hifax CA 10A |
| Vernetzungsmittel (Phenolharz) | D | SI Group | SP 1045H |
| Weichmacher (Weißöl) | F | Shell | Shell Ondina 941 |
| Stabilisation, Hilfsstoffe und Farbe: | G | | |
| Additiv 1 | | BASF | Tinuvin 326 |
| Additiv 2 | | BASF | Chimasorb 944 FDL |
| Additiv 3 | | BASF | Irganox 1330 |
| Additiv 4 | | BASF | Irgafos 168 |
| Additiv 5 | | Rhenogran Zheolite 70 | Rhein Chemie Additives |
| Füllstoffe | H | Bayer | ZnO Aktiv |

**Tabelle 11:**

| **Mechanische Werte** | | | |
|---|---|---|---|
| | | **Beispiel 3** | **Beispiel 4** |
| **Wert** | **Einheit** | | |
| Dichte | g/cm³ | 0,927 | 0,94 |
| Härte | ShA | 64 | 64 |
| Zugfestigkeit | N/mm² | 4 | 4,1 |
| Bruchdehnung | % | 209 | 206 |
| 100% | MPa | 2,5 | 2,7 |
| 200% | MPa | 4,0 | 4,1 |
| Weiterreißfähigkeit | N/mm² | 13,3 | 16,3 |
| Druckverformungsrest bei 70°C/22h | % | 26,5 | 25,0 |
| Druckverformungsrest bei 100°C/22h | % | 33,3 | 30,5 |
| Druckverformungsrest bei 120°C/22h | % | 46,0 | 47,0 |
| Haftung auf PP | N/mm² | 4,5 | 4,7 |

| | | | |
|---|---|---|---|
| Die Werte für Dichte, Härte, Zugfestigkeit, Bruchdehnung, Dehnkraft(100%, 200%, 300%) und Weiterreißfähigkeit sind bei Raumtemperatur aufgenommen. | | | |

## Patentansprüche

1. Thermoplastische Elastomerzusammensetzung, die ein Elastomer, ein nicht-elastomeres Polyolefin und ein thermoplastisches Elastomer auf Polyolefin-Blockcopolymer-Basis (TPO) enthält, wobei das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, epoxidierter Naturkautschuk und einer Mischung aus zwei oder mehreren der genannten Elastomere besteht, wobei das Elastomer als unvernetztes Elastomer oder als dynamisch vernetztes Elastomer vorliegt.

2. Thermoplastische Elastomerzusammensetzung nach Anspruch 1, worin das Elastomer als dynamisch vernetztes Elastomer vorliegt.

3. Thermoplastische Elastomerzusammensetzung nach Anspruch 1 oder 2, worin die Mischung aus nicht-elastomerem Polyolefin und TPO die Matrix darstellt, in die das Elastomer eingebettet vorliegt.

4. Thermoplastische Elastomerzusammensetzung nach einem der Ansprüche 1 bis 3, worin das TPO ein Blockcopolymer ist, das mindestens zwei verschiedene Alkylen-Einheiten aufweist.

5. Thermoplastische Elastomerzusammensetzung nach einem der Ansprüche 1 bis 4, worin das nicht-elastomere Polyolefin ein Polypropylen, vorzugsweise hPP ist.

6. Thermoplastische Elastomerzusammensetzung nach einem der Ansprüche 1 bis 5, worin das Gewichtsverhältnis von Elastomer zu nicht-elastomerem Polyolefin im Bereich von 100:15 bis 100:60 liegt.

7. Thermoplastische Elastomerzusammensetzung nach einem der Ansprüche 1 bis 6, worin das Gewichtsverhältnis von Elastomer zu TPO im Bereich von 100:5 bis 100:45 liegt.

8. Verwendung einer Mischung aus einem Elastomer und einem Vernetzungsmittel für das Elastomer zur Herstellung einer thermoplastischen Elastomerzusammensetzung gemäß einem der Ansprüche 1 bis 7, worin das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, epoxidierter Naturkautschuk und einer Mischung aus zwei oder mehreren der genannten Elastomere besteht.

9. Verwendung einer Mischung aus einem nicht-elastomeren Polyolefin und einem TPO zur Herstellung einer thermoplastischen Elastomerzusammensetzung gemäß einem der Ansprüche 1 bis 7.

10. Verwendung einer thermoplastischen Elastomerzusammensetzung gemäß einem der Ansprüche 1 bis 7 zur Herstellung eines Verbundmaterials mit einem Polyolefin.

11. Artikel hergestellt aus einem thermoplastischen Elastomer gemäß einem der Ansprüche 1 bis 7 und einem Polyolefin.

12. Verwendung einer thermoplastischen Elastomerzusammensetzung gemäß einem der Ansprüche 1 bis 7 zur Herstellung von Bauteilen oder Formkörpern im Automobilinnenbereich sowie unter der Motorhaube ("under the hood"), d.h. im Motorraum von Fahrzeugen, zur Herstellung von Industriegeräten, Industriewerkzeugen, Badarmaturen, Haushaltsgeräten, Geräten der Unterhaltungselektronik, Sportartikeln, medizinischen Verbrauchsartikeln und Geräten, Behältern für Hygieneartikel und Kosmetika und allgemein Dichtungsmaterialien.

13. Verfahren zur Herstellung einer thermoplastischen Elastomerzusammensetzung gemäß einem der Ansprüche 1 bis 7, worin ein Elastomer, ein nicht-elastomeres Polyolefin und ein TPO vermischt werden, wobei das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, epoxidierter Naturkautschuk und einer Mischung aus zwei oder mehreren der genannten Elastomere besteht.

14. Verfahren nach Anspruch 13, worin in einem ersten Schritt das Elastomer vorbehandelt wird, und in einem zweiten Schritt eine Mischung aus nicht-elastomerem Polyolefin und TPO hinzugegeben wird.

15. Verfahren nach Anspruch 14, worin in dem ersten Schritt das Elastomer mittels Temperatureinwirkung, vorzugsweise bei 50°C bis 120°C, stärker bevorzugt im Bereich von 80°C bis 110°C, erweicht und zusammen mit einem Vernetzungsmittel vermischt wird.

16. Verfahren nach Anspruch 14 oder 15, worin vor dem zweiten Schritt die Mischung aus nicht-elastomerem Polyolefin und TPO in einem Extruder, einem Innenmischer oder einem Kneter, vorzugsweise in einem Doppelschneckenextruder hergestellt wird.

## Claims

1. Thermoplastic elastomer composition which contains an elastomer, a non-elastomeric polyolefin and a thermoplastic elastomer based on polyolefin block copolymers (TPO), wherein the elastomer comprises an elastomer selected from the group of elastomers consisting of ethylene-vinyl acetate copolymer, nitrile butadiene rubber, hydrogenated nitrile butadiene rubber, butyl rubber, natural rubber, isoprene rubber, acrylate rubber, ethylene acrylate rubber, silicone rubber, styrene-butadiene rubber, chloroprene rubber, bromobutyl rubber, epichlorohydrin rubber, epoxidized natural rubber and a mixture of two or more of the said elastomers, wherein the elastomer is present as an uncrosslinked elastomer or as a dynamically crosslinked elastomer.

2. Thermoplastic elastomer composition according to claim 1, wherein the elastomer is present as a dynamically crosslinked elastomer.

3. Thermoplastic elastomer composition according to claim 1 or 2, wherein the mixture of non-elastomeric polyolefin and TPO represents the matrix in which the elastomer is present embedded.

4. Thermoplastic elastomer composition according to one of claims 1 to 3, wherein the TPO is a block copolymer, which has at least two different alkylene units.

5. Thermoplastic elastomer composition according to one of claims 1 to 4, wherein the non-elastomeric polyolefin is a polypropylene, preferably hPP.

6. Thermoplastic elastomer composition according to one of claims 1 to 5, wherein the weight ratio of the elastomer to the non-elastomeric polyolefin lies in the range of from 100:15 to 100:60.

7. Thermoplastic elastomer composition according to one of claims 1 to 6, wherein the weight ratio of the elastomer to the TPO lies in the range of from 100:5 to 100:45.

8. Use of a mixture of an elastomer and a crosslinking agent for the elastomer to produce a thermoplastic elastomer composition according to one of claims 1 to 7, wherein the elastomer comprises an elastomer selected from the group of elastomers consisting of ethylene-vinyl acetate copolymer, nitrile butadiene rubber, hydrogenated nitrile butadiene rubber, butyl rubber, natural rubber, isoprene rubber, acrylate rubber, ethylene acrylate rubber, silicone rubber, styrene-butadiene rubber, chloroprene rubber, bromobutyl rubber, epichlorohydrin rubber, epoxidized natural rubber and a mixture of two or more of the said elastomers.

9. Use of a mixture of a non-elastomeric polyolefin and a TPO to produce a thermoplastic elastomer composition according to one of claims 1 to 7.

10. Use of a thermoplastic elastomer composition according to one of claims 1 to 7 to produce a composite material with a polyolefin.

11. Article produced from a thermoplastic elastomer according to one of claims 1 to 7 and a polyolefin.

12. Use of a thermoplastic elastomer composition according to one of claims 1 to 7 to produce components or shaped bodies in automobile interiors as well as under the hood, i.e. in the vehicle's engine compartment, to produce industrial devices, industrial tools, bathroom fittings, household appliances, consumer electronics, sporting goods, medical consumables and devices, containers for hygiene products and cosmetics and sealing materials in general.

13. Process for producing a thermoplastic elastomer composition according to one of claims 1 to 7, wherein an elastomer, a non-elastomeric polyolefin and a TPO are mixed, wherein the elastomer comprises an elastomer selected from the group of elastomers consisting of ethylene-vinyl acetate copolymer, nitrile butadiene rubber, hydrogenated nitrile butadiene rubber, butyl rubber, natural rubber, isoprene rubber, acrylate rubber, ethylene acrylate rubber, silicone rubber, styrene-butadiene rubber, chloroprene rubber, bromobutyl rubber, epichlorohydrin rubber, epoxidized natural rubber and a mixture of two or more of the said elastomers.

14. Process according to claim 13, wherein in a first step the elastomer is pre-treated, and in a second step a mixture of non-elastomeric polyolefin and TPO is added.

15. Process according to claim 14, wherein in the first step the elastomer softens by the effect of temperature, preferably at 50°C to 120°C, more preferably in the range of from 80°C to 110°C, and is mixed together with a crosslinking agent.

16. Process according to claim 14 or 15, wherein the mixture of non-elastomeric polyolefin and TPO is produced in an extruder, an internal mixer or a kneader, preferably in a twin-screw extruder, before the second step.

## Revendications

1. Composition d'élastomères thermoplastique, qui contient un élastomère, une polyoléfine non élastomère et un élastomère thermoplastique à base de copolymère séquencé de polyoléfine (TPO), où l'élastomère comprend un élastomère qui est choisi dans le groupe d'élastomères qui consiste en copolymère éthylène-acétate de vinyle, caoutchouc nitrile-butadiène, caoutchouc nitrile-butadiène hydrogéné, caoutchouc butyle, caoutchouc naturel, caoutchouc d'isoprène, caoutchouc d'acrylate, caoutchouc éthylène-acrylate, caoutchouc de silicone, caoutchouc styrène-butadiène, caoutchouc de chloroprène, caoutchouc de bromobutyle, caoutchouc d'épichlorhydrine, caoutchouc naturel époxydé et un mélange de deux ou plus des élastomères cités, où l'élastomère est présent sous forme d'élastomère non réticulé ou sous forme d'élastomère réticulé de manière dynamique.

2. Composition d'élastomères thermoplastique selon la revendication 1, où l'élastomère est présent sous forme d'élastomère réticulé de manière dynamique.

3. Composition d'élastomères thermoplastique selon la revendication 1 ou 2, où le mélange de polyoléfine non élastomère et de TPO représente la matrice dans laquelle l'élastomère est présent sous forme incluse.

4. Composition d'élastomères thermoplastique selon l'une des revendications 1 à 3, où le TPO est un copolymère séquencé qui présente au moins deux unités alkylène différentes.

5. Composition d'élastomères thermoplastique selon l'une des revendications 1 à 4, où la polyoléfine non élastomère est un polypropylène, de préférence le hPP.

6. Composition d'élastomères thermoplastique selon l'une des revendications 1 à 5, où le rapport en poids de l'élastomère à la polyoléfine non élastomère est situé dans le domaine de 100:15 à 100:60.

7. Composition d'élastomères thermoplastique selon l'une des revendications 1 à 6, où le rapport en poids de l'élastomère au TPO est situé dans le domaine de 100:5 à 100:45.

8. Utilisation d'un mélange d'un élastomère et d'un agent de réticulation pour l'élastomère pour la production d'une composition d'élastomères thermoplastique selon l'une des revendications 1 à 7, où l'élastomère comprend un élastomère qui est choisi dans le groupe d'élastomères qui consiste en copolymère éthylène-acétate de vinyle, caoutchouc nitrile-butadiène, caoutchouc nitrile-butadiène hydrogéné, caoutchouc butyle, caoutchouc naturel, caoutchouc d'isoprène, caoutchouc d'acrylate, caoutchouc éthylène-acrylate, caoutchouc de silicone, caoutchouc styrène-butadiène, caoutchouc de chloroprène, caoutchouc de bromobutyle, caoutchouc d'épichlorhydrine, caoutchouc naturel époxydé et un mélange de deux ou plus des élastomères cités.

9. Utilisation d'un mélange d'une polyoléfine non élastomère et d'un TPO pour la production d'une composition d'élastomères thermoplastique selon l'une des revendications 1 à 7.

10. Utilisation d'une composition d'élastomères thermoplastique selon l'une des revendications 1 à 7 pour la production d'un matériau composite avec une polyoléfine.

11. Article produit à partir d'un élastomère thermoplastique selon l'une des revendications 1 à 7 et d'une polyoléfine.

12. Utilisation d'une composition d'élastomères thermoplastique selon l'une des revendications 1 à 7 pour la production d'éléments de construction ou de pièces moulées dans le domaine à l'intérieur des automobiles ainsi que sous le capot du moteur (« under the hood »), c'est-à-dire dans le compartiment du moteur de véhicules automobiles, pour la production d'appareils pour l'industrie, d'outils pour l'industrie, d'accessoires de bain, d'appareils ménagers, d'appareils de l'électronique de loisirs, d'articles de sport, d'articles consommables et d'appareils médicaux, de récipients pour articles d'hygiène et cosmétiques et d'une manière générale de matériaux d'étanchéité.

13. Procédé pour la production d'une composition d'élastomères thermoplastique selon l'une des revendications 1 à 7, où un élastomère, une polyoléfine non élastomère et un TPO sont mélangés, où l'élastomère comprend un élastomère qui est choisi dans le groupe d'élastomères qui consiste en copolymère éthylène-acétate de vinyle, caoutchouc nitrile-butadiène, caoutchouc nitrile-butadiène hydrogéné, caoutchouc butyle, caoutchouc naturel, caoutchouc d'isoprène, caoutchouc d'acrylate, caoutchouc éthylène-acrylate, caoutchouc de silicone, caoutchouc styrène-butadiène, caoutchouc de chloroprène, caoutchouc de bromobutyle, caoutchouc d'épichlorhydrine, caoutchouc naturel époxydé et un mélange de deux ou plus des élastomères cités.

14. Procédé selon la revendication 13, où dans une première étape l'élastomère est prétraité, et dans une deuxième étape un mélange de polyoléfine non élastomère et de TPO est ajouté.

15. Procédé selon la revendication 14, où dans la première étape l'élastomère est ramolli sous l'effet de la température, de préférence à 50°C à 120°C, de préférence encore dans le domaine de 80°C à 110°C, et mélangé avec un agent de réticulation.

16. Procédé selon la revendication 14 ou 15, où avant la deuxième étape le mélange de polyoléfine non élastomère et de TPO est produit dans une extrudeuse, un mélangeur interne ou un malaxeur, de préférence dans une extrudeuse à deux vis.
